(19) Europäisches Patentamt
European Patent Office
Office européen des brevets

(11) EP 1 746 747 B1

(12) EUROPÄISCHE PATENTSCHRIFT

(45) Veröffentlichungstag und Bekanntmachung des Hinweises auf die Patenterteilung:
**01.06.2016 Patentblatt 2016/22**

(51) Int Cl.:
***H04B 17/391*** *(2015.01)* ***H04B 17/00*** *(2015.01)*

(21) Anmeldenummer: **06015226.1**

(22) Anmeldetag: **21.07.2006**

(54) **Verfahren zur Nachbildung eines Mehrwegeübertragungskanals**

Method for emulating a multi-path transmission channel

Procédé destiné à la reproduction d'un canal de transmission à plusieurs voies

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.07.2005 DE 102005034192**
**25.03.2006 DE 102006013842**

(43) Veröffentlichungstag der Anmeldung:
**24.01.2007 Patentblatt 2007/04**

(73) Patentinhaber: **Deutsches Zentrum für Luft- und Raumfahrt e.V.**
**51147 Köln (DE)**

(72) Erfinder:
- **Steingass, Alexander, Dr.**
  **82205 Gilching (DE)**
- **Lehner, Andreas**
  **82266 Inning a. A. (DE)**

(74) Vertreter: **dompatent von Kreisler Selting Werner Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A- 1 450 502**
**EP-A- 1 578 032**
**WO-A-2005/008926**
**DE-A1-102004 051 388**
**US-A1- 2004 116 111**
**US-A1- 2004 253 950**
**US-B1- 6 571 082**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Nachbildung eines Mehrwegeübertragungskanals.

Außerhalb der Ionosphäre besteht eines der besonders signifikanten Probleme darin, eine genaue Navigation sowohl für das GPS (Global Positioning System) als auch für GALILEO hinsichtlich des Mehrwege-Empfangs in Städten zu schaffen. Es existieren bereits verschiedene Kanalmodelle für Boden-Boden-Kommunikationen, so beispielsweise COST 207 WG1 (Proposal on channel transfer functions to be used in GSM tests 1986; Technical report, CEPT Paris, 1986).

Bei dem Versuch, die wegen Ästen und Blättern sehr komplexe Struktur von Bäumen durch ein Modell nachzubilden, sind sehr komplizierte Modelle, wie Raytracing u.ä. entwickelt worden. Eine ebenfalls sehr komplizierte, die Rückstreuung an Wäldern/Bäumen betreffende Modellierung ist auf der Konferenz EUSAR 2000 vorgestellt worden. (Siehe "A multi-constituent and multi-layer model for coherent backscattering of forested areas" von C.Ruiz et al, EURAS 2000, 23.-25.05.2000, München. Eine weitere Veröffentlichung zu diesem Thema ist: "Sensitivity analysis for forest interferometric, polarimetric observables estimation" von C. Ruiz und P.Borderies; Polinsar 2005 Workshop, 17-21/01/2005 ESA/ESRIN).

Das derzeit bekannteste System, das auf dem Prinzip der Ortsbestimmung mittels der Erfassung von Signallaufzeiten beruht, ist das GPS-System. Dieses im Prinzip weltweit zur Verfügung stehende System weist 28 Satelliten auf, welche die Erde umkreisen und Signale aussenden, die von einem Benutzer des Systems zur Ortsbestimmung genutzt werden können. Mit einem geeigneten Empfänger kann der Benutzer auf der Erde aufgrund von Laufzeitmessungen der Satellitensignale seine Position bestimmen, wobei für den Empfänger zur genauen Positionsbestimmung jeweils vier Satelliten gleichzeitig "sichtbar" sein müssen. Durch geeignete Anordnung von Umlaufbahnen für die Satelliten ist dies im wesentlichen zu jedem Zeitpunkt und an jedem Ort der Erde möglich.

Die Genauigkeit, mit der die Position eines Empfängers mit Hilfe des GPS-Systems bestimmt werden kann, hängt in entscheidendem Maße davon ab, wie genau die Laufzeiten der von den verschiedenen Satelliten empfangenen Signale bestimmt werden können. Da sich das Navigationssignal annähernd mit Lichtgeschwindigkeit fortbewegt, hat eine Fehleinschätzung der Laufzeit von 1 $\mu$s in etwa einen Entfernungsfehler von annähernd 300 m zur Folge.

Da bei dem GPS-System die internen Uhren der Satelliten mit der Uhr des Empfängers synchronisiert sind und dementsprechend dem Empfänger bekannt ist, zu welchem Zeitpunkt ein Signal von einem Satelliten ausgesendet wurde, reduziert sich das primäre Problem der Laufzeitbestimmung darauf, den Empfangszeitpunkt für das Signal exakt zu bestimmen.

Problematisch ist in diesem Zusammenhang allerdings, dass die im Blickfeld eines Empfängers befindlichen Satelliten permanent und gleichzeitig ihre Signale übermitteln und der Empfänger somit aus der Summe aller empfangenen Signale jeweils die einzelnen, zur Ortsbestimmung nutzbaren Signale gezielt herausfiltern muss.

Die klassische Vorgehensweise zur Lösung des vorstehend geschilderten Problems besteht in einer Auswertung der Kreuzkorrelationsfunktion, die sich durch eine Korrelation des am Empfänger eintreffenden und mit weiteren Signalen vermischten Signals mit einem in dem Empfänger generierten Korrelations-Signal ergibt, welches ein Duplikat des von dem Satelliten übermittelten Navigationssignals darstellt. Bei dem GPS-System bestehen die von den Satelliten übermittelten Navigationssignale aus Folgen von negativen und positiven Impulsen, die zu einem quasi-zufälligen Signal, dem so genannten PRN-(Pseudo Random Noise)-Code zusammengefügt wurden.

Die Kreuzkorrelationseigenschaften dieser auch als Gold-Codes bezeichneten Signale sind dabei derart gewählt, dass sich durch die Bestimmung des Maximums der im Empfänger gebildeten Kreuzkorrelationsfunktion der Zeitpunkt des Empfangs des PRN-Codes ermitteln lässt. Im Idealfall, in dem das von dem Satelliten übermittelte Signal während der Übertragung nicht verfälscht wird, ließe sich auf diese Weise der Empfangszeitpunkt des Signals mit sehr hoher Genauigkeit bestimmen.

Allerdings muss davon ausgegangen werden, dass eine ideale Signalübertragung niemals vorliegt. Vielmehr wird das Navigationssignal auf seinem Weg vom Satelliten zum Empfänger durch verschiedene äußere Einflüsse verfälscht. Eines der größten Probleme stellt dabei der sogenannte Mehrwegeempfang (Multi-path) des Signals dar, der infolge von (Mehrfach)-Reflexionen des Satellitensignals auftritt. An Gebäuden, Bäumen, Bergen oder anderen Objekten in der Umgebung des Empfängers können die GPS-Signale reflektiert werden und hierdurch als zusätzliche Echo-Signale zu dem auf direktem Wege übermittelten Satellitensignal zum Empfänger gelangen.

Durch Überlagerungen des direkt übermittelten Signals mit den Echo-Signalen wird letztendlich das am Empfänger eintreffende Signal derart verfälscht, dass die zuvor beschriebene Vorgehensweise zur Bestimmung des Empfangszeitpunkts mittels Kreuzkorrelation keine ausreichende Genauigkeit mehr bietet. Vielmehr hat sich gezeigt, dass auch effektivere Vorgehensweisen zur Auswertung der Korrelationsfunktion nicht in der Lage sind, Echo-Signale in ausreichender Weise von dem auf direktem Wege übermittelten Signal abzutrennen und damit eine eindeutige Erfassung des Empfangszeitpunkts zu ermöglichen.

Um auch in einer derartigen Mehrwegeumgebung genauere Ortsbestimmungen durchführen zu können, werden sogenannte Superresolution-Verfahren eingesetzt, welche eine Alternative bzw. Ergänzung zur Ermittlung der Signallaufzeit mittels Kreuzkorrelation darstellen. Diese Superresolution-Verfahren beruhen auf Algorithmen, mit denen der sogenannte Kanal für die Signalübertragung abgeschätzt werden soll.

Der Übertragungskanal stellt dabei ein theoretisches Modell dar, mit dem die Veränderung des Satellitensignals auf dem Weg vom Satelliten zum Empfänger beschrieben wird. In diesem Kanal-Modell unterscheiden sich die Echosignale gegenüber dem auf direktem Wege übertragenen Primärsignal hinsichtlich ihrer durch eine Verzögerungszeit verlängerten Laufzeit, der schwächeren Signalstärke sowie einer eventuell veränderten Bandbreite und Phase.

Im Rahmen der Superresolution-Algorithmen wird versucht, einen theoretischen Übertragungskanal abzuschätzen, dessen Einfluss auf das Satellitensignal weitestgehend der Realität entspricht. Dies erfolgt anhand eines Vergleichs des tatsächlich am Empfänger eingetroffenen Signals mit auf Basis von verschiedenen Modell-Übertragungskanälen berechneten synthetischen Empfangs-Signalen.

Bekannte Algorithmen hierfür sind beispielsweise der sogenannte MUSIC (Multiple Signal Classification)-Algorithmus oder der ESPRIT (Estimation of Signal Parameters Via Rotational Invariance Techniques)-Algorithmus. Wurde ein Kanal gefunden, der die bestmögliche Schätzung für die Übertragung des Satellitensignals ermöglicht, kann aus diesem dann die Laufzeit für das direkt (also ohne Reflexionen) übertragene Satellitensignal abgeleitet werden.

Durch die vorstehend beschriebenen Superresolution-Verfahren kann zwar die Genauigkeit bei der Ermittlung der Signallaufzeit in Mehrwegeumgebungen verbessert werden, nach wie vor stellt sich allerdings das Problem, dass die Schätzung des Übertragungskanals nur mit einer bestimmten Genauigkeit erfolgen kann. Da die Schätzung des Kanals ausschließlich anhand des beobachteten bzw. tatsächlich empfangenen Signals erfolgt (sog. Aposteriori-Schätzung), ist das gewonnene Ergebnis immer mit einer gewissen Unsicherheit bzw. einem Fehler behaftet.

Dieses Problem stellt sich nicht nur bei dem GPS-System und dem geplanten Galileo-System, sondern allgemein immer dann, wenn der Zeitpunkt des Empfangs eines Signals möglichst genau bestimmt werden soll, das Signal allerdings während der Übertragung durch Reflexionen oder andere äußere Einflüsse verfälscht wird.

Es wurde vorgeschlagen, die Erkenntnis zu nutzen, dass Signalechos im Hinblick auf ihre Laufzeitverzögerung und Leistung mit unterschiedlich hoher Wahrscheinlichkeit auftreten. Einfluss auf das Auftreten von Signalechos hat dabei insbesondere die Art der Umgebung, in der sich der Empfänger befindet. So hat sich beispielsweise gezeigt, dass bestimmte Signalechos vorwiegend dann auftreten, wenn sich der Empfänger in einer urbanen Umgebung befindet, in der das Satellitensignal von Häuserwänden in der Umgebung des Empfängers reflektiert wird. Derartige Signalechos treten allerdings, wenn sich der Empfänger in einer ländlichen Umgebung befindet, mit deutlich geringerer Wahrscheinlichkeit auf.

Eine Auswertung experimentell gewonnener Messdaten hat gezeigt, dass die Wahrscheinlichkeiten für das Auftreten von Echo-Signalen im wesentlichen einer generellen oder mittleren Wahrscheinlichkeitsverteilung folgen, wobei diese mittlere Verteilung allerdings je nach dem, in welcher Umgebung sich der Empfänger des Signals befindet, in bestimmter Weise modifiziert bzw. beeinflusst wird. Hierbei spielt auch die Elevation des das Signal ausstrahlenden Satelliten bzw. eines Satelliten-Senders eine Rolle.

In DE 10 2004 051 388 wird vorgeschlagen, die Erkenntnis über das Auftreten von Signalechos - die sogenannten Apriori-Wahrscheinlichkeiten - bei der Bestimmung des Empfangszeitpunkts eines Signals zu nutzen. Da ein bei der Abschätzung des Übertragungskanals verwendeter Modell-Übertragungskanal im wesentlichen das Auftreten mehrerer Signalechos beschreibt, geben die Apriori-Wahrscheinlichkeiten Auskunft darüber, wie wahrscheinlich ein bestimmter Modell-Übertragungskanal überhaupt ist. Auf Basis dieser Informationen kann dementsprechend die Abschätzung des Übertragungskanals deutlich verbessert werden, was wiederum eine genauere Bestimmung des Empfangszeitpunkts sowie der Signallaufzeit erlaubt.

Hierbei können die Apriori-Wahrscheinlichkeiten in unterschiedlicher Weise berücksichtigt werden. Bei einer einfachen Variante ist vorgesehen, eine einzige Wahrscheinlichkeitsverteilung zu nutzen, welche die Apriori-Wahrscheinlichkeiten für das Auftreten von Echos verschiedener Verzögerung und Leistung angibt. Bei dieser Variante stellt die Wahrscheinlichkeitsverteilung ein Mittel sämtlicher für verschiedene Umgebungs-Typen gewonnener Wahrscheinlichkeitsverteilungen für das Antreffen von Echos dar, wobei die Wahrscheinlichheitsverteilung unabhangig davon verwendet wird, in welcher Umgebung sich der Empfänger gerade befindet.

Diese Wahrscheinlichkeitsverteilung kann entweder im Rahmen experimenteller Messungen gewonnen oder durch ein theoretisches Modell beschrieben werden, welches die aus Messungen oder anderen theoretischen Berechnungen gewonnen Erkenntnisse in vereinfachter Weise beschreibt. Obwohl diese Lösung es nicht ermöglicht, unterschiedliches Echo-Verhalten in verschiedenen Umgebungen zu berücksichtigen, kann trotz allem eine Verbesserung im Vergleich zu bisher bekannten Kanal-Abschätzungen erzielt werden.

Bei einer weiteren Variante ist vorgesehen, nunmehr auch die Umgebung, in der sich der Empfänger des Navigationssignals befindet, zu berücksichtigen. Wie bereits vorstehend erwähnt, hat sich gezeigt, dass sich die Wahrscheinlichkeitsverteilungen für das Auftreten von Signalechos zumindest in bestimmten Bereichen verändern, wenn sich die Umgebung des Empfängers ändert. Um dies zu berücksichtigen, können je nachdem, in welcher Umgebung sich der Empfänger gerade befindet, unterschiedliche Verteilungen für die Apriori-Wahrscheinlichkeiten verwendet werden.

Dies könnte zum einen dadurch erfolgen, dass die in der einfachen Variante verwendete mittlere Wahrscheinlichkeitsverteilung in bestimmten Bereichen modifiziert wird. Eine Alternative besteht darin, aus einer Reihe von unterschiedlichen Wahrscheinlichkeitsverteilungen, die jeweils ein bestimmtes Umgebungsszenario beschreiben, diejenige Wahrscheinlichkeitsverteilung auszuwählen, die der aktuellen Umgebung des Empfängers entspricht.

Da sehr hohe Datenmengen verarbeitet werden müssen, sind hierzu nicht nur teuere Speicher erforderlich, sondern ist auch aufgrund der anfallenden Datenmengen, deren Verarbeitung verhältnismäßig langsam. Ferner besteht derzeit keine Möglichkeit, das Szenario zu verändern, wie beispielsweise speziell durchzuführende Fahrten vorzunehmen. Azimutale Änderungen können bisher, wenn überhaupt, nur sehr aufwendig berücksichtigt werden. Ferner führt ein in den Daten enthaltendes Rauschen zu fehlerhaften Detektionen.

Zum Bestimmen des auf einen Signalempfänger bezogenen Azimut- und Elevationswinkels von Reflexionsobjekten, die ein von einem Sender ausgestrahltes Signal zu dem sich bewegenden Empfänger umlenken, wird üblicherweise ein Channel-Sounder eingesetzt, der einen entsprechenden Impuls sendet. Es können auch andere intelligente Verfahren eingesetzt werden, die mit einer Spreizfrequenz oder einem anderen Signal arbeiten, wie es beispielsweise in DE 197 41 991 C1 bezüglich des dort beschriebenen Channel-Sounder-Meßsystems ausgeführt ist. Mittels einer dieser aus dem Stand der Technik bekannten Verfahren kann die Laufzeit einer Reflexion vom Sender zum Empfänger und damit auch dessen Verzögerung bestimmt werden.

Aufgabe der vorliegenden Erfindung ist es daher, ein möglichst genaues, sehr schnell arbeitendes und obendrein sehr aufwandeffektives Kanalmodell einer Mehrwegeübertragung für Satelliten-Navigationssysteme und/oder Mobilfunksysteme anzugeben.

Gemäß der Erfindung ist diese Aufgabe bei einem Verfahren zur Bildung eines Kanalmodells einer Mehrwegeübertragung insbesondere für ein Satelliten-Navigationssystem durch die Merkmale der Anspruchs 1 gelöst. Vorteilhafte Weiterbildungen sind Gegenstand von auf den Anspruch 1 unmittelbar oder mittelbar rückbezogenen Ansprüchen.

Das System gemäß der Erfindung gilt für mehrere Reflektoren, die geeignet erzeugt und entfernt werden. Der Einfachheit halber ist jedoch im folgenden nur von einem Reflektor die Rede.

Gemäß einer bevorzugten Ausführungsform der Erfindung wird ein Reflektor stochastisch nachgebildet und es werden Verzögerung $\Delta\tau(x) = \frac{|\vec{r}_r(x)| - \vec{r}_r(x)\cdot\vec{r}_z(x)}{c_0}$ und Dopplerphase $\varphi_D(x) = \frac{|\vec{r}_r(x)|}{2\pi\lambda}$ berechnet, wobei x die Fahrtrichtung ist, $\vec{r}_r$ und $\vec{r}_z$ die Vektoren von einem Empfänger zu dem Reflektor bzw. dem Satelliten sind, das skalare Produkt $\vec{r}_r(x)\cdot\vec{r}_z(x)$ die Projektion von $\vec{r}_r$ in $\vec{r}_z$ ist und $\lambda$ die Wellenlänge ist. Hierbei kann die Position eines Reflektors unter Verwendung von erstellten Statistiken zufällig ausgewählt werden, wobei die Statistiken unter Zuhilfenahme von Messungen erstellt werden können und elevations- und/oder azimutabhängig sind. Ferner können die Statistiken durch Multiplizieren der unbedingten Wahrscheinlichkeit und der relativen Auftreff-Wahrscheinlichkeit in Abhängigkeit vom Azimut ermittelt werden.

Darüber hinaus kann die Reflektionsleistung eines Reflektors anhand von Tabellen oder Funktionen statistisch bestimmt werden, wobei Tabellen anhand von Messungen erstellt werden und elevations- und/oder azimutabhängig sind.

Darüber hinaus wird ein Rice-Faktor, der aus einem konstanten und einem varianten Bestandteil besteht, statistisch erfasst und ausgewählt. Der ausgewählte Rice-Faktor wird aus Messungen gebildet und ist elevationsabhängig.

Gemäß einer vorteilhaften Weiterbildung der Erfindung weist der Reflektor eine Lebensdauer gemessen in Metern (m) entsprechend einer Fahrstrecke eines virtuellen Fahrzeugs auf wobei eine derartige Fahrstrecke anhand von Tabellen und/oder Funktionen erstellt wird. Hierbei können die Tabellen und Funktionen auf Messungen beruhen. Ferner kann der Reflektor mit dem virtuellen Fahrzeug mit entsprechender Geschwindigkeit mitbewegt werden. Hierzu wird ein zeitvarianter Prozess überlagert, welcher durch weißes Rauschen mit einer spektralen Filterung erzeugt wird, die auf Messungen beruhen kann.

Gemäß der Erfindung werden zum Erzeugen einer stochastischen Größe zwei gewichtete Prozesse, nämlich ein schmalbandiger und ein breitbandiger Prozess linear überlagert, die jeweils durch ihre Spektren, Mittelwerte und Varianzen repräsentiert werden. Hierbei können die beiden Prozesse aus Statistiken, beispielsweise auch aus Messdaten gebildet werden. Ferner können stochastische Prozesse aus einer Anzahl von Echos gebildet werden.

Nachfolgend wird die Erfindung anhand der Zeichnungen erläutert. Es zeigen:

| | |
|---|---|
| Fig.1 | eine schematische Darstellung zur Definition des Winkels $\alpha$; |
| Fig.2 und 3 | jeweils eine horizontale Reflektorposition in städtischer Umgebung bei 10° bzw. 30° Elevation, wobei sowohl auf der x- als auch auf der y-Achse die Koordinaten in m aufgetragen sind; |
| Fig.4 | eine Likelyhood-Verteilung des relativen Azimutwinkels $\alpha$ bei 50° Elevation; |

| | |
|---|---|
| Fig.5 | einen in städtischer Umgebung häufig anzutreffenden Eckreflektor; |
| Fig.6 | eine bedingte Wahrscheinlichkeit von Reflektoren in einer bestimmten 2D Position mit einem Satelliten bei 25° Azimut; |
| Fig.7 | eine Darstellung der Lebensdistanz von Echos, wobei auf der x-Achse die Lebensdistanz in m und auf der y-Achse deren Anzahl aufgetragen sind; |
| Fig.8 | ein Rice-Faktor-Histogram von reflektierten Signalen eines sich in urbaner Umgebung bewegenden Fahrzeugs bei 30° Elevation; |
| Fig.9 | eine Modelldarstellung eines isolierten Reflektors; |
| Fit.10 | gleichzeitig auftretende Echos während einer Fahrt von etwa 15 min. durch eine Stadt; |
| Fig.11 | eine synthetisch erzeugte Anzahl an Reflexionen/Echos; |
| Fig.12 | ein dem Kanalmodell zugrunde liegende Szenerie in Draufsicht; |
| Fig.13a | eine schematische Darstellung einer Beugung an einer Häuserfront; |
| Fig.13b | einen gemessenen und modulierten Graphen der Beugung an einer Häuserfront; |
| Fig.14 | einen schematisch wiedergegebenen Baum, dessen Krone als homogener Körper in Form von sogenannten Baumzylindern und deren Stamm in Form eines kreiszylinderförmigen Körpers wiedergegeben ist; |
| Fig.15 | einen Graphen betreffend die Dämpfung durch drei Baumkronen mit einem überlagerten stochastischen Anteil; |
| Fig.16 | den Graphen betreffend die Dämpfung durch eine Baumkrone; |
| Fig.17a | eine schematische Darstellung eines Lichtmastes als Pfosten in Form eines Metallzylinders; |
| Fig.17b | einander überlagerte, durch Messung bzw. Modellierung erhaltene Dämpfungskurven, betreffend Dämpfung durch einen Lichtmasten, und |
| Fig.18 | Blockdiagramm eines Kanalmodells. |

Künstliche Szenerie

In einer offenen Umgebung lässt sich der direkte Weg am besten durch eine Sichtlinien(LOS)-Übertragung des Signals dargestellen. Nachstehend werden alle Messungen relativ zu diesem LOS-Weg angegeben. In urbaner Umgebung ist die LOS versperrt, so dass das Signal gegenüber der LOS gedämpft und möglicherweise verzögert ist. Haupthindernisse in Städten, welche den Signalweg beeinflussen, sind Häuserfronten, Bäume und Lichtpfosten. (Fig.12)

Bei einer Messkampagne des Anmelders hat sich bestätigt, dass sich während einer Fahrt durch eine Stadt die Anzahl an Echos sehr stark ändert. Für einen Navigationsempfänger, welcher versucht, die Kanalimpulsantwort zu schätzen, ist eine hohe Anzahl an Reflexionen/Echos praktisch nicht zu verarbeiten. Ein Beispiel für die hohe Anzahl Echos ist in Fig.1 wiedergegeben; dies wurde bei einer Messkampagne in städtischer Umgebung bei 40° Elevation gemessen. Hierbei ist das gleichzeitige Auftreten einer hohen Anzahl von Echos, nämlich bis zu 50, zu beachten.

Eine Szenerie weist, wie in Fig.1 schematisch skizziert, einen Sender hierin Form eines Satellitens, einen Empfänger an einer Position RX, und einen Reflektor an einer Position R auf. Der relative Winkel an dem Empfänger zwischen Satellit S und Reflektor R ist $\alpha$. Selbstverständlich können auch mehrere Satelliten bzw allgemein Sender nachgebildet werden.

Erzeugung virtueller Reflektoren

In einer ersten Datenbank sind elevationsabhängig zunächst als unbedingte Wahrscheinlichkeiten horizontale Reflektorpositionen unter 5°, 10°, 20°, 30°, 40° usw. Elevation abgelegt. Beispiele von in städtischer Umgebung gemessenen Horizontalreflektor-Positionen bei 10° und 30° Elevationen sind in Fig.2 bzw. Fig.3 wiedergegeben.

In einer zweiten Datenbank ist die Abhängigkeit vom relativen Winkel gespeichert.

Die Wahrscheinlichkeitsdichtefunktion $p(\alpha)$ des Winkels $\alpha$ kann aus gewonnenen Daten bestimmt werden. Allerdings ist bei dieser Verteilung zu beachten, dass der Satellit-Azimut nicht gleichmäßig während der Messung verteilt war. Um dies zu korrigieren, führt eine Wichtung durch die Häufigkeitswahrscheinlichkeit $p(\varphi)$ des Satelliten-Azimuts $\varphi$ zu einem Histogramm $h_\alpha$ :

$$\mathbf{h}_\alpha = (h_1\ h_2 \ldots)$$

Die diskrete Wahrscheinlichkeitsverteilung $p_\alpha$ ist dann:

$$\mathrm{p}_\alpha = \frac{\mathrm{h}_\alpha}{\sum_\alpha \mathrm{h}_\alpha}$$

Als ein Beispiel in einer urbanen Umgebung bei 50° Elevation ist die Verteilung in Fig.4 dargestellt.

Unabhängig von dem Satelliten-Azimut $\varphi$ relativ zu der Fahrtrichtung des Empfängers in x-Richtung hat der Winkel $\alpha$ ein Maximum bei 180°. Befindet sich bei einer Häuserfront entlang einer Straße ein Satellit auf der linken Seite, führt dies zu einer Reflexion auf der rechten Seite der Straße. Wenn der Satellit sich beispielsweise bei 45° (vorne links) befindet, kommen überraschenderweise die meisten Reflexionen aus 225° (rechts hinten) und nicht von der rechten Häuserfrontseite, wo der spiegelnde Reflexionspunkt auf einer Häuserwand liegen würde.

Dies auf den ersten Blick erstaunliche Ergebnis ist auf die rechtwinklige Struktur von Städten zurückzuführen. Infolge dieser Struktur kommen in Städten oft sogenannte Eckreflektoren vor (Fig.5). Charakteristisch für einen solchen Reflektor ist, dass ein von einem Satelliten kommender Strahl in der horizontalen Ebene in Richtung zum Satelliten zurückreflektiert wird, wobei die Elevation des Strahls unverändert ist.

Als erster Schritt zum Berechnen der bedingten Wahrscheinlichkeit wird in beiden Datenbanken für die gerade zu simulierende Elevation nachgeschlagen. Anschließend erfolgt ein Drehen der in der zweiten Datenbank gespeicherten Ergebnisse um den relativen Winkel $\alpha$, welcher der Winkel zwischen der Standlinie sowie der Verbindungslinie Empfänger - Reflektor ist. Schließlich wird noch eine geeignete Kombination durchgeführt. Die Wahrscheinlichkeit, dass sich ein Reflektor an einer bestimmten Position mit einer bestimmten Satellitenelevation $\varepsilon$ und einem bestimmten relativen Satelliten-Azimut $\varphi$ befindet, kann beispielsweise durch Multiplikation der Wahrscheinlichkeiten

$$\mathbf{P}_{r,\psi}(\varepsilon,\varphi) = \frac{\mathbf{P}_{r,\psi}(\varepsilon)\ \cdot \mathbf{p}_{\alpha-\varphi}(\varepsilon)}{\sum_r \sum_\psi \mathbf{P}_{r,\psi}(\varepsilon)\ \cdot \mathbf{p}_{\alpha-\varphi}(\varepsilon)}$$

berechnet werden, wobei $P_{r,\psi}(\varepsilon)$ die horizontale Reflektorpositionsverteilung, $p_\alpha(\varepsilon)$ eine Reflektorrichtungsabhängigkeit relativ zu dem Satelliten-Azimut ist und mit $\varepsilon$ die Elevation und mit $\varphi$ der Azimut bezeichnet sind. Hieraus folgt die bedingte Wahrscheinlichkeit für einen vorgegebenen Azimut und Kurs.

Als ein Beispiel ist das Ergebnis dieser Operation in Fig.6 dargestellt für $\varepsilon$ = 35° und = 25°. Die Fahrtrichtung des Fahrzeugs verläuft in x-Richtung; der Satellit befindet sich vor dem Fahrzeug etwas links oben und die wahrscheinlichste Reflektorposition liegt auf der rechten Seite der Straße hinter dem Fahrzeug.

Nunmehr folgt ein Zufallsexperiment unter Verwendung der bedingten Wahrscheinlichkeiten. Das Ergebnis ist eine Position (x, y). Die Wahl der z-Koordinate des Reflektors erfolgt mit geeigneten Verfahren. Beispielsweise kann eine senkrechte Hauswand angenommen werden, auf der sich der Reflektorpunkt befindet. Weiterhin kann angenommen werden, dass der Einfallswinkel gleich dem Ausfallswinkel ist. Somit ergibt sich aus der Horizontaldistanz Empfänger - Reflektor und der Satellitenelevation die Reflektorhöhe H(z). Es ist weiterhin vorteilhaft anzunehmen, dass eine maximale Höhe existiert, die beispielsweise identisch mit der größten Haushöhe im zu simulierenden Gebiet ist.

Eine dritte Datenbank beinhaltet wiederum elevationsabhängig, beispielsweise für die ermittelte Position (x, y) eine ortsabhängige mittlere Leistung. Eine vierte Datenbank beinhaltet wiederum elevationsabhängig die ortsabhängige Varianz der Leistung. Durch Nachschlagen in den beiden Datenbanken für die entsprechende Elevation in den jeweiligen Datensätzen wird als Ergebnis die mittlere Leistung und die Varianz für die vorher ermittelte Position erhalten.

Als nächstes wird ein Zufallsexperiment hinsichtlich der Leistung durchgeführt. Mittelwert und Varianz werden hinzugefügt, um die gewählte Leistung des Reflektors zu bestimmen. Für dieses Element wird eine Gauß-Verteilung mit dem in der Datenbank nachgeschlagenen Mittelwert und der nachgeschlagenen Varianz angenommen. Als Ergebnis wird die gewählte bzw. tatsächliche Leistung des "gewürfelten" Reflektors erhalten. Somit ist bekannt, wo sich der Reflektor befindet und welche mittlere Leistung er hat.

In einer weiteren Datenbank ist die Lebensdauer bzw. -distanz eines Reflektors in m gespeichert. Mit einem Zufallsexperiment wird die gewählte Lebensdauer des Reflektors ermittelt (Fig.7). Wie umfangreiche Messungen des Anmelders wiederholt gezeigt haben, variieren die Reflektoren zusätzlich zeitlich.

Zum Nachbilden dieser zeitlichen Varianz kann weißes Rauschen über ein Filter geleitet werden; die Filterfunktion ist das Gauß'sche Filterspektrum S(f),

$$S(f) = \frac{1}{\sigma\sqrt{2\pi}} e^{-f^2/(2\sigma^2)}$$

wobei dessen Fouriertransformierte der Filterfunktion (Spektrum) ein Gauß'sches Spektrum aufweist, und wobei die Standardabweichung $\sigma$ gegeben ist durch

$$\sigma = \frac{B_e}{2\sqrt{2\ln(2)}}$$

wobei mit $B_e$ die Bandbreite bezeichnet ist, die geeignet gewählt wird. Ferner wird noch eine Konstante hinzugefügt. Auch hier können Datenbanken zum Einsatz kommen. Weiterhin haben umfangreiche Messungen des Anmelders gezeigt, dass die Amplitude der zeitlichen Varianz nach unten hin begrenzt ist. Dieser Prozess kann nicht durch eine einfache Rayleigh-Verteilung, sondern in vorteilhafter Weise durch eine Rice-Verteilung nachgebildet werden.

Der Faktor bzw. das Verhältnis aus dem konstanten Teil und dem zeitvarianten Teil wird als Rice-Faktor $K_{Rice}$ bezeichnet. (Fig.8)

$$K_{Rice} = \frac{P_{const}}{P_{fading}}$$

Eine entsprechende Gewichtung ist so gewählt, dass die mittlere Leistung des Prozesses 1 ist. Es ergibt sich also eine mittlere Rauschleistung, die gleich 1 ist. Das Ergebnis ist das in Fig.7 korrigierte Modell eines isolierten Reflektors.

Eine besonders günstige Ausführung der Nachbildung eines Reflektors ist

$$\mathcal{F}^{-1}\left\{\sqrt{S(f)}\right\} = \lim_{N_c \to \infty} \frac{1}{\sqrt{N_c}} \sum_{i=1}^{N_c} e^{j2\pi f_i t + \varphi_i}$$

Eine weitere vorteilhafte Ausführung zur Nachbildung eines Reflektors ist in Patent DE 198 08 954 angegeben.

Wie eingangs bereits ausgeführt, besteht eine Szenerie im Sinne dieser Anmeldung aus einem Satelliten, einem Reflektor und einem virtuellen Fahrzeug (als sich bewegen der Empfänger).

Ein entsprechendes Modell zum Nachbilden eines Reflektors ist in Fig.9 dargestellt. Wie dem Modell zu entnehmen ist, werden Kurs und Azimut eingegeben und aus diesen der relative Winkel gebildet. Ferner werden Elevation und Geschwindigkeit des Fahrzeugs eingegeben. Als Ausgang wird dann der Delay$\Delta\tau$ sowie die Phase $\varphi$ erhalten.

Zu beachten ist noch, dass bei dieser Nachbildung des Szenarien der virtuelle Satellit nicht exakt in Fahrtrichtung d.h. vordem Fahzeug steht, sondern im relativen Winkel zur Fahrtrichtung. Wenn beispielsweise ein reales Fahrzeug nach Norden fährt, steht auch in der virtuellen Szenerie der Satellit genau im Norden. Wenn das Fahrzeug jedoch leicht nach Osten fährt, dann wird der Satellit nach Westen "gedreht". Im Modell fährt dann das Fahrzeug also weiter geradeaus in x-Richtung (nach Norden), wobei die Veränderung der Fahrtrichtung durch eine "Verdrehung" des Satelliten abgebildet wird.

Da die Position des Empfängers, die Position des Reflektors R und die Position des Satelliten S bekannt sind, kann nunmehr der Delay $\Delta\tau$ berechnet werden. Hierzu wird ein Reflektor R an einer zufällig ausgewählten Stelle erzeugt, wobei mit dem Empfänger an dem Reflektor vorbeigefahren wird. Nunmehr können sowohl der Delay $\Delta\tau$ und die Phase $\varphi_D$ geometrisch berechnet werden

$$\Delta\tau(x) = \frac{|\vec{r}_r(x)| - \vec{r}_r(x)\cdot\vec{r}_z(x)}{c_0}$$

wobei dann $\vec{r}_r$ und $\vec{r}_z$ die Vektoren von einem Empfänger zu dem Reflexionspunkt bzw. dem Satelliten sind und das skalare Produkt $\vec{r}_r(x)\cdot\vec{r}_z(x)$ die Projektion von $\vec{r}_r$ *in* $\vec{r}_z$ ist.

Die Phasenänderung in dem reflektierten Signal hängt nur von $\vec{r}_r$ und der Wellenlänge $\lambda$ ab. Folglich gilt

$$\varphi_D(x) = \frac{|\vec{r}_r(x)|}{2\pi\lambda}$$

Dieser Prozess ist vorteilhafterweise bewegungsabhängig.

Aufgrund der bekannten Geometrie ist bekannt, wo sich der Reflektor befindet, und durch das Vorbeifahren an dem Reflektor kann für jeden Zeitpunkt der Delay $\Delta\tau$ und die Phase $\varphi_D$ berechnet werden.

Bei einer virtuellen Fahrt wird also zu einem geeigneten Zeitpunkt ein Reflektor erzeugt, welcher solange aktiv bleibt, bis die ab Erzeugung des Reflektors zurückgelegte Wegstrecke länger ist als die Lebensdauer, d.h. die vorher gewählte Lebensdauer des Reflektors. Mit anderen Worten verschwindet also der Reflektor, nach einer gewissen Zeit bzw. Strecke.

In vorteilhafter Weise kann auch noch ein farbiger Rauschprozess hinzugefügt werden. Eine derartige Überlagerung des Rauschens ist im unteren Teil der Fig.9 angeführt.

Ein besonderer Vorteil des Prozesses zum Nachbilden eines Reflektors ist unter anderem auch darin zu sehen, dass mit relativ kleinen Datenbanken verhältnismäßig große Szenarien nachgebildet werden können. Natürlich werden die Datenmengen größer, je feiner die Elevation aufgelöst wird. In der durchgeführten Messkampagne ist mit einer 5° Elevation, wie eingangs beschrieben, begonnen worden und dann in 10-er Sprüngen bis 90° fortgefahren worden.

Bestimmung einer aktuellen Anzahl Reflektoren

Eine Fourier-Transformation des in Fig.10 wiedergegebenen Beispiels zeigt zwei Prozesse, nämlich einen sehr schmalbandigen Prozess hoher Leistung und einen breitbandigen Prozess niedriger Leistung. Der schmalbandige Prozess gibt hierbei die sich ändernden Mehrwegebedingungen in Straßen wieder, wobei sich die Änderungen durch verschiedene Haustypen sowie kleinere Objekte, wie Bäume, Verkehrszeichen, Lichtmasten u.ä. erklären lassen. Beide Prozesse sind für verschiedene Elevationen angenähert und in einem sogenannten "Echo-Nummer-Generator" implementiert. Die Prozesse können vorteilhafterweise wegabhängig modelliert werden.

Die kumulative Verteilungsfunktion (CDF) eines schmalbandigen Prozesses mit einer Leistung $P_n$ ist durch eine teilweises lineare Funktion P(X) angenähert, um diesen Effekt genau zu modellieren.

Der Breitbandprozess kann am besten als farbiges Rauschen modelliert werden, das durch ein Digitalfilter mit n = 7 parameterisiert ist:

$$\frac{b(z)}{a(z)} = \frac{b_1 + b_2 z^{-1} + \ldots + b_{n+1} z^{-n}}{a_1 + a_2 z^{-1} + \ldots + a_{n+1} z^{-n}}$$

Ein rekursives Filterdesign, das in die Yulewalk-Funktion in Matlab implementiert ist, wird verwendet, um das spezifische Frequenzverhalten auszubilden. Eine synthetische Echoanzahl $N_e(x)$ kann nunmehr als Summe eines schmalbandigen Signals $N_n(x)$, eines breitbandigen Signals $N_w(x)$ und dem Mittelwert $\bar{n}$ an Echos berechnet werden.

$$N_e(x) \;\; d/= \; N_n(x) + N_w(x) + \bar{n}$$

$$= \sqrt{P_n}\,\frac{1}{\sqrt{N}}\sum_{i=1}^{N} e^{j2\pi f_{i,n}x+\varphi_{i,n}} + z^{-1}\left\{\frac{b(z)}{a(z)}\right\} * n(x) + \bar{n}$$

Das schmalbandige niederfrequente Signal wird durch eine Summe von Trägern $N_c$ mit Gauß-verteilten Frequenzen $f_{i,n}$ angenähert, die entsprechend der PDF (Probability Density Function) *p(X)*

$$P(x) = \frac{d}{dx} P(x)$$

verteilt sind und gleichverteilte Anfangsphasen $\varphi_{i,n}$ haben.

Das breitbandige Signal wird durch Multiplizieren mit einem Leistungfaktor $P_1$ bzw. $P_2$ und Addieren einer Konstanten $C_1$ bzw. $C_2$ sowie Addieren der beiden Zweige und durch Begrenzen in einem Begrenzer, Filtern von weißem Gauß-Rauschen mit einer spektralen Leistungsdichte von $N_o$ = 1 W/Hz realisiert. Damit ist der stochastische Prozess abgeschlossen (Fig.3). Ein Beispiel für die sich ergebende Anzahl von Reflexionen ist in Fig.11 dargestellt. Gegebenenfalls auftretende negative Echos werden eliminiert, indem sie null gesetzt werden.

Abschattung des direkten Pfades durch Häuser

Selbstverständlich können bei einem realistischen Kanalmodell auch mehrere Häuserseilen modelliert werden. Der Einfachheit halber ist im folgenden jedoch immer nur von einer Häuserzeile gesprochen.

Bei dem erfindungsgemäßen Kanalmodell bewegt sich, wie in Fig.12 dargestellt, ein Fahrzeug F nur in x-Richtung. Häuser H mit Gauß-verteiler minimaler, maximaler und mittlerer Höhe und statistisch verteilten Lücken, Bäume BZ unterschiedlicher Höhe und mit unterschiedlich großen Kronen in gleichen, unterschiedlichen oder statistisch verteilten Abständen und Lichtmasten P in gleichen, unterschiedlichen oder statistisch verteilten Abständen, befinden sich rechts und links entlang einer geraden, in x-Richtung verlaufenden Straße ST.

Eine künstliche Szenerie kann somit aus derartigen Häuserzeilen entlang einer Straße bestehen, auf welcher zwischen den Häuserzeilen hindurch gefahren wird; Kreuzungen, Plätze u.ä. sind durch Lücken in der künstlichen Szenerie abgebildet.

Fig.13a zeigt schematisch über einem Haus einen Satelliten sowie eine Beugung eines Signals an einer Häuserfront. Fig.13b zeigt einen Graphen betreffend eine Messung einer durch eine "Häuserfront" hervorgerufenen Beugung entlang einer Fahrstrecke. Die Fahrstrecke ist auf der Abszisse in m und die in dB wiedergegebene Leistung ist auf der Ordinate aufgetragen. Im linken Teil des Graphen besteht eine gute Übereinstimmung einer modulierten und einer gemessenen Oszillation.

Bereits in der Nähe der Dachkante beginnt eine Oszillation der Leistung, weil sich der direkte Pfad dem an der Dachkante gebrochenen Pfad phasenrichtig überlagert. Es kommt teilweise zu Auslöschungen (siehe die Einbrüche) und teilweise zu phasenrichtigen Ergänzungen (siehe die Überhöhungen).

Etwa bei 3385m ist die "Dachkante der Häuserzeile" erreicht; der Satellit wird von der "Häuserzeile" zunehmend verdeckt. Die Leistung fällt daher sehr schnell ab, und liegt bei etwa -20dB. Diese Verhältnisse lassen sich mit dem bekannten "Knife-Edge-Beugungsmodell" modellieren.

In Fig.13b sind die gemessenen Werte durch eine ausgezogene Linie wiedergegeben, während die gestrichelte Linie die modulierte berechnete Dämpfung gemäß dem "Knife-Edge-Beugungsmodell" wiedergibt. Es ergibt sich eine nahezu perfekte Übereinstimmung zwischen Messung und Modell. Es könnte auch noch ein weiterer statistischer Prozess hinzugefügt werden, bei welchem die Rauhheit des Gebäudes berücksichtigt wird.

Abschattung des direkten Pfades durch Bäume

Selbstverständlich können mit einem realistischen Kanalmodell auch mehrere Bäume modelliert werden. Der Einfachheit halber wird nachstehend von einem Baum gesprochen. Bäume haben wegen ihrer Äste und Blätter eine sehr komplexe Struktur. Wenn sich Bäume im direkten Übertragungsweg (LOS) der von einem Satelliten eines Navigationssystems abgestrahlten Signale befinden, werden, wie umfangreiche Messungen des Anmelders gezeigt haben, die LOS-Signale durch Baumkronen gedämpft, während sie an Baumstämmen gebeugt werden.

Wie der schematischen Darstellung in Fig.14 zu entnehmen ist, lassen sich gemäß der Erfindung Bäume bzw. Baumkronen durch homogene Körper beispielsweise in Form von "Baum"-Zylindern BZ nachbilden, die an einer nicht näher bezeichneten Straße stehen können, auf welcher sich ein skizzenhaft angedeutetes Fahrzeug F mit einem Empfänger E befindet. Ein den linken Baum bzw. dessen Krone nachbildender "Baum"-Zylinder BZ hat eine Höhe $h_k$ und einen Durchmesser $d_k$ und soll eine entsprechend zu wählende Baumdichte in einem stochastischen Prozess haben. Der direkte Übertragungsweg (LOS) eines von einem nicht dargestellten Satelliten eines Satellitennavigationssystems ausgestrahlten Signals $s_1$ ist durch eine den "Baum"-Zylinder BZ durchdringende Linie angedeutet.

Wenn sich das Fahrzeug F entlang der Straße bewegt, wird das Signal $s_1$ durch den "Baum"-Zylinder BZ gedämpft und erreicht entsprechend gedämpft den Empfänger E.

Diese Dämpfung ist bezüglich des durch den "Baum"-Zylinder BZ gedämpften Signals $s_1$ in Fig.16 dargestellt, wobei auf der Abszisse die Fahrstrecke in m und auf der Ordinate die Leistung in dB aufgetragen ist.

Die Einbuchtung in dem Graphen von Fig.16 gibt die durch den "Baum"-Zylinder BZ verursachte Dämpfung wieder, welche in Fig.15 beispielsweise in der Größenordnung von etwa 7dB liegt. Hierdurch ist der deterministische Modellierungsanteil gebildet.

Wie in Fig.15 dargestellt, kann ein LOS-Signal durch Bäume gedämpft werden. Das in Fig.15 wiedergegebene Signal wurde bei einer Vorbeifahrt an drei Bäumen gemessen. Der gemessene Prozess hängt einerseits von der Länge des LOS-Signals in der Baumkrone ab und andererseits ist ein zusätzlicher Effekt sichtbar, welcher durch Zweige und Blätter hervorgerufen wird.

Um die in Fig.15 wiedergegebenen gemessenen Signale nachzubilden, wurde eine Kombination aus einem dielektrischen dämpfenden Zylinder, welcher den Durchgang durch die Baumkrone mit einem konstanten Dämpfungsfaktor $\alpha_{tr}$ pro Meter modelliert, und einem statistischen Fadingprozess vorgenommen, welcher die Zweige und Blätter modelliert. Beide Effekte sind jedoch nur von der Empfängerposition x abhängig und damit ausschließlich wegabhängig. Daher wurde das gemessene Signal als eine Funktion von x analysiert, um Parameter für den stochastischen Prozess herzuleiten.

Durch Teilen des gemessenen Signals durch eine tiefpassgefilterte Version, welche zu dem zylinderförmigen Modell mit imaginärer Dielektrizitätskonstante passt, konnte der verbleibende stochastische Prozess isoliert werden. Die Amplitudenverteilung dieses Prozesses kann vorteilhafterweise Rayleighverteilt modelliert werden.

Aus Messungen konnte berechnet werden, dass ein Konstantanteil in dem Modell vorhanden ist. Insofern ist es vorteilhaft, in der Modellierung ebenso einen Konstantanteil hinzuzufügen. Die Amplitudenverteilung ändert sich dann von der erwähnten Rayleigh-Verteilung hin zu einer Rice-Verteilung. Das Verhältnis von zeitvariantem und konstantem Anteil des Rice-Faktors kann dann angegeben werden. Die Inphasen- und Quadraturkomponente ist bezüglich dieser Amplitude Gauß-verteilt.

Der gesamte Dämpfungskoeffizient A(x) durch das zylindrische "Baumkronen"-Modell, bei welchem der Rice'sche Fadingprozess der deterministischen Dämpfung des dielektrischen Zylinders überlagert ist, kann dann folgendermaßen berechnet werden:

$$A(x) = \alpha_{tr} l_{tr}(x) \cdot A_{stoch}(x)$$

mit

$$A_{stoch}(x) = \frac{1}{\sqrt{1 + K_{Rice,tr}}} \left( \sqrt{K_{Rice,tr}} e^{j\varphi_C} + \mathcal{F}^{-1}\left\{ \sqrt{S_{tr}(X)} \right\} \right)$$

wobei $\sqrt{K_{Rice,tr}} e^{j\varphi_C}$ das konstante Signal des Rice-Prozesses mit einer zufällig gewählten Phase $\varphi_C \in [0,2\pi]$ darstellt. Das Fadingsignal wird aus dem normierten Gauß'schen Wegleistungsspektrum $S_{tr}(X)$ hergeleitet:

$$S_{tr}(X) = \frac{1}{\sigma\sqrt{2\pi}} e^{-X^2/(2\sigma^2)}$$

wobei das Wegleistungsspektrum in diesem Zusammenhang ein Leistungsdichtespektrum aus der Fourier-Transformation eines Signals bezüglich des Wegs und nicht, wie sonst üblich, bezüglich der Zeit darstellt und wobei die Standardabweichung $\sigma$ gegeben ist durch

$$\sigma = \frac{B_{tr}}{2\sqrt{2\ln(2)}}$$

Der stochastische Prozess $A_{stoch}(x)$, welcher durch die Summe der Konstanten und das Fadingsignal gegeben ist, wird durch den Faktor $\frac{1}{1 + K_{Rice,tr}}$ normiert.

Zur realistischen Nachbildung von Körpern, insbesondere Baumstämmen, wird ein solcher Körper mit dem sogenannten Double-Knife-Edge-Modell modelliert. In Fig.17 ist die nahezu perfekte Übereinstimmung zwischen Modell und Messung wiedergegeben. Auch dieser Prozess ist wiederum nur positions- und damit wegabhängig.

Eine vorteilhafte Implementierung wird nachstehend angegeben, wobei das Fadingsignal als eine Summe von $N_c$ Trägern mit Gauß-verteilten Frequenzen $f_{i,tr}$ und gleichverteilten Phasen $\varphi_{i,tr}$ realisiert ist:

$$\mathcal{F}^{-1}\left\{\sqrt{S_{tr}(X)}\right\} = \lim_{N_c \to \infty} \frac{1}{\sqrt{N_c}} \sum_{i=1}^{N_c} e^{j2\pi f_{i,tr} x + \varphi_{i,tr}}.$$

In Fig.14 ist schematisch ein Stamm des Baums durch einen kreiszylindrische "Pfosten" P nachgebildet. Ein von einem Satelliten beispielsweise eines Navigationssystems ausgestrahltes Signal $s_2$ wird an dem "Pfosten" P an zwei gegenüberliegenden Stellen des "Pfosten" P gebeugt, was in Fig.14 durch zwei kurze gestrichelte Linien angedeutet ist. Diese Beugung durch den einen Baumstamm nachbildenden "Pfosten" P lässt sich mit Hilfe eines Double-Knife-Edge-Modells nachbilden.

Dasselbe gilt für in Fig.17 schematisch wiedergegebene Masten, wie Lichtmasten, Laternen oder dergl. die ebenfalls als senkrecht ausgerichtete "Pfosten" wiedergegeben sind.

In Fig.17a sind die mit Hilfe der Double-Knife-Edge-Modellierung erhaltenen Werte den bei einer Messkampagne gemessenen Werten überlagert. In Fig.17b, in welcher auf der Abszisse die Entfernung in m und auf der Ordinate die Leistung in dB aufgetragen sind, ist der gemessene Signalverlauf durch eine ausgezogene Linie und der modellierte Signalverlauf durch eine gestrichelte Linie wiedergegeben. Somit besteht eine sehr gute Übereinstimmung zwischen gemessenem und modelliertem Signalverlauf. Auch diese Funktion ist bewegungsabhängig und nicht zeitabhängig.

In Fig.18 ist eine Struktur eines Kanalmodells wiedergegeben, das vier Eingabeparameter aufweist, die zeitlich abgetastete Empfänger-/Nutzer-Geschwindigkeit, den Kurs des Empfängers/Nutzers, sowie den Azimut und die Elevation des Satelliten.

Diese Werte werden in ein Bewegungsmodell eingegeben, das aus Geschwindigkeit, Abtastrate (Abtastdauer), Kurs und Satellitenkurs zwei Werte berechnet, nämlich den x-Weg (da in diesem Modell nur in x-Richtung gefahren wird), die eingegebene Satelliten-Elevation und den relativen Azimut, wozu die Differenz aus dem Kurs des Nutzers und dem Satellitenazimut gebildet wird. Wenn in der realen Welt in eine Kurve gefahren wird, wird im Kanalmodell geradeaus in x-Richtung beispielsweise durch eine Häuserzeile gefahren; hierzu wird nur der Satellit "zur Seite gedreht", wodurch ein "Um-die-Kurvefahren" simuliert wird.

**Patentansprüche**

1. Verfahren zur Nachbildung eines Mehrwegeübertragungskanals zwischen einem Sender (S) und einem sich bewegenden Empfänger (RX), dessen Bewegung durch die Wegkoordinate (x) beschrieben wird, sowie mit mindestens einem Reflektor (R), an dem ein vom Sender (S) ausgesandtes Signal reflektiert wird, bevor es den Empfänger (RX) erreicht,
**dadurch gekennzeichnet,**

- **dass** eine Position des mindestens einen Reflektors (R) relativ zum Sender (S) und zum Empfänger (RX) zufällig bestimmt wird,
- **dass** (i) die durch die Reflektion des Signals an dem mindestens einen Reflektor (R) verursachte Verzögerung ($\Delta_\tau$ (x)) der Signallaufzeit zwischen dem Sender (S) und dem Empfänger (RX) und (ii) die Dopplerphase ($\varphi_D$(x) jeweils in Abhängigkeit von der Wegkoordinate (x) wie folgt berechnet werden:

$$\Delta\tau(x) = \frac{\left|\vec{r}_r(x)\right| - \vec{r}_r(x)\cdot\vec{r}_z(x)}{c_0}$$

und Dopplerphase $\varphi_D$

$$\varphi_D(x) = \frac{\left|\vec{r}_r(x)\right|}{2\pi\lambda}$$

- wobei

- $\vec{r}_r$ der Vektor von dem Empfänger (RX) zu dem mindestens einen Reflektor (R),
- $\vec{r}_z$ der Vektor von dem Empfänger (RX) zu dem Sender (S),
- $\vec{r}_r(x) \times \vec{r}_z(x)$ das von der Wegkoordinate (x) abhängige Skalarprodukt und damit die Projektion von $\overleftrightarrow{r}_r$ in $\vec{r}_z$,
- $c_0$ die Lichtgeschwindigkeit und

2. Verfahren nach Anspruch 1, **dadurch gekennzeichnet, dass** die Position des mindestens einen Reflektors (R) anhand einer statistischen Auftreffwahrscheinlichkeitsverteilung bestimmt wird, die die Wahrscheinlichkeit dafür beschreibt, dass in Abhängigkeit von der Position des mindestens einen Reflektors (R) das vom Sender (S) ausgesandte Signal den Reflektor (R) erreicht, wobei die Auftreffwahrscheinlichkeitsverteilung abhängig ist von der Elevation und/oder dem Azimut des Senders (S).

3. Verfahren nach Anspruch 2, **dadurch gekennzeichnet, dass** die statistische Auftreffwahrscheinlichkeitsverteilung anhand von Vermessungen der Positionen realer Reflektoren in Abhängigkeit von der Elevation und/oder dem Azimut eines realen Senders (S) erstellt wird.

4. Verfahren nach einem der Ansprüche 2 bis 3, **dadurch gekennzeichnet,**
**dass** die Auftreffwahrscheinlichkeitsverteilung durch Multiplikation einer von der Elevation des Senders (S) abhängigen Auftreffwahrscheinlichkeit und einer von dem Azimut des Senders (S) abhängigen Auftreffwahrscheinlichkeit bestimmt wird.

5. Verfahren nach einem der Ansprüche 1 bis 4, **dadurch gekennzeichnet, dass** die Reflektionsleistung des mindestens einen Reflektors bezogen auf die zuvor bestimmte Position bestimmt wird, und zwar in Abhängigkeit von der Elevation und/oder dem Azimut des Senders (S) anhand von Tabellen oder Funktionen.

6. Verfahren nach Anspruch 5, **dadurch gekennzeichnet, dass** die Tabellen anhand von Vermessungen von Reflektionsleistungen realer Reflektoren erstellt werden.

7. Verfahren nach Anspruch 5 oder 6, **dadurch gekennzeichnet, dass** die Reflektionsleistung anhand einer Rice-Verteilung bestimmt wird.

8. Verfahren nach Anspruch 7, **dadurch gekennzeichnet, dass** die Rice-Verteilung durch einen von der Elevation des Senders (S) abhängigen Rice-Faktor bestimmt ist, der durch Vermessungen von Reflektoren ermittelt wird.

9. Verfahren nach einem der Ansprüche 1 bis 8, **dadurch gekennzeichnet, dass** für den Fall, dass das von dem mindestens einen Reflektor (R) reflektierte Signal des Senders (S) den Empfänger (RX) für die Dauer einer bestimmten Wegstrecke des Empfängers (RX) erreicht, dem mindestens einen Reflektor (R) eine der Wegstrecke entsprechende Lebensdauer, gemessen in einer Längeneinheit, zugeordnet wird, und dass die Lebensdauer zufällig aus einer Tabelle ausgewählt wird, die durch Vermessungen realer Reflektoren erstellt wird.

## Claims

1. Method for emulating a multi-path transmission channel between a transmitter (S) and a moving receiver (RX) whose movement is described by the path coordinate (x), said method performed by use of at least one reflector (R) by means of which a signal transmitted by the transmitter (S) is reflected before reaching the receiver (RX), **characterized in**

   - **that** a position of said at least one reflector (R) relative to the transmitter (S) and to the receiver (RX) is determined randomly,
   - **that** (i) the delay ($\Delta\tau$ (x)) of the signal propagation time between the transmitter (S) and the receiver (RX) as caused by the reflection of the signal on said at least one reflector (R), and (ii) the Doppler phase ($\varepsilon_D$(x)) are each computed, in dependence on the path coordinate (x), as follows:

$$\Delta\tau(x) = \frac{\left|\vec{r}_r(x)\right| - \vec{r}_r(x) \cdot \vec{r}_z(x)}{c_0}$$

and Doppler phase $\varphi_D$

$$\varphi_D(x) = \frac{\left|\vec{r}_r(x)\right|}{2\pi\lambda}$$

- wherein

- $\vec{r}_r$ is the vector from the receiver (RX) to said at least one reflector (R),
- $\vec{r}_z$ is the vector from the receiver (RX) to the transmitter (S),
- $\vec{r}_z$(x) x $\vec{r}_z$ (x) is the scalar product depending on the path coordinate (x) and thus is the projection of $\vec{r}_r$ in $\vec{r}_z$,
- $c_0$ is the speed of light and
- $\lambda$ is the wavelength of the signal.

**2.** The method according to claim 1, **characterized in that** the position of said at least one reflector (R) is determined with the aid of a statistical distribution of the impingement likelihood which describes the likelihood that, in dependence on the position of said at least one reflector (R), the signal transmitted by the transmitter (S) will reach the reflector (R), said distribution of the impingement likelihood being dependent on the elevation and/or the azimuth of the transmitter (S).

**3.** The method according to claim 2, **characterized in that** the statistical distribution of the impingement likelihood is obtained by measuring the positions of real reflectors in dependence on the elevation and/or the azimuth of the real transmitter (S).

**4.** The method according to any one of claims 2 to 3, **characterized in that** the distribution of the impingement likelihood is determined by multiplication of an impingement likelihood dependant on the elevation of the transmitter (S) and an impingement likelihood dependant on the azimuth of the transmitter (S).

**5.** The method according to any one of claims 1 to 4, **characterized in that** the reflection power of said at least one reflector is determined in relation to the previously determined position, in dependence on the elevation and/or the azimuth of the transmitter (S) with the aid of tables or functions.

**6.** The method according to claim 5, **characterized in that** the tables are compiled on the basis of measurements of reflection powers of real reflectors.

**7.** The method according to claim 5 or 6, **characterized in that** the reflection power is determined on the basis of a Rice distribution.

**8.** The method according to claim 7, **characterized in that** the Rice distribution is determined from a Rice factor dependant on the elevation of the transmitter (S), said Rice factor being determined by measurements of reflectors.

**9.** The method according to any one of claims 1 to 8, **characterized in that**, in case that the signal of the transmitter (S) reflected by said at least one reflector (R) reaches the receiver (RX) for the duration of a specific path length of the receiver (RX), a lifespan measured by length units and corresponding to the path length is assigned to said at least one reflector (R), and that the lifespan is randomly selected from a table compiled by measurements of real reflectors.

## Revendications

**1.** Procédé destiné à la reproduction d'un canal de transmission à plusieurs voies entre un émetteur (S) et un récepteur (RX) qui se déplace et dont le mouvement est décrit par la coordonnée de chemin (x) et avec au moins un réflecteur (R) sur lequel un signal émis par l'émetteur (S) est réfléchi avant qu'il n'arrive au récepteur (RX), **caractérisé en ce que**

- une position dudit au moins un réflecteur (R) par rapport à l'émetteur (S) et au récepteur (RX) est déterminée au hasard,
- le décalage ($\Delta\tau(x)$) du temps de propagation du signal entre l'émetteur (S) et le récepteur (RX) causé par la réflexion du signal sur ledit au moins un réflecteur (R) et (ii) la phase Doppler ($\varphi_D(x)$) sont calculés chacun en fonction de la coordonnée de chemin (x) de la manière suivante :

$$\Delta\tau(x) = \frac{\left|\vec{r}_r(x)\right| - \vec{r}_r(x) \cdot \vec{r}_z(x)}{c_0}$$

et la phase Doppler $\varphi_D$

$$\varphi_D(x) = \frac{\left|\vec{r}_r(x)\right|}{2\pi\lambda}$$

- où

  - $\vec{r}_r$ est le vecteur du récepteur (RX) jusqu'audit au moins un réflecteur (R),
  - $\vec{r}_z$ est le vecteur du récepteur (RX) jusqu'à l'émetteur (S),
  - $\vec{r}_r(x) \times \vec{r}_z(x)$ est le produit scalaire en fonction de la coordonnée de chemin (x) et ainsi la projection de $\vec{r}_r$ en $\vec{r}_z$,
  - $c_0$ est la vitesse de la lumière et
  - $\lambda$ est la longueur d'onde du signal.

**2.** Procédé selon la revendication 1, **caractérisé en ce que** la position dudit au moins un réflecteur (R) est déterminée sur la base d'une distribution statistique de probabilité de succès qui décrit la probabilité que le signal émis par l'émetteur (S) atteint le réflecteur (R) en fonction de la position dudit au moins un réflecteur (R), la distribution statistique de probabilité de succès étant fonction de l'élévation et/ou de l'azimut de l'émetteur (S).

**3.** Procédé selon la revendication 2, **caractérisé en ce que** la distribution statistique de probabilité de succès est obtenue sur la base de mesurages des positions de réflecteurs réels en fonction de l'élévation et/ou de l'azimut d'un émetteur (S) réel.

**4.** Procédé selon l'une des revendications 2 à 3, **caractérisé en ce que** la distribution statistique de probabilité de succès est obtenue par la multiplication d'une probabilité de succès fonction de l'élévation de l'émetteur (S) avec une probabilité de succès en fonction de l'azimut de l'émetteur (S).

**5.** Procédé selon l'une des revendications 1 à 4, **caractérisé en ce que** la puissance de réflexion dudit au moins un réflecteur est déterminée par rapport à la position préalablement déterminée et cela en fonction de l'élévation et/ou de l'azimut de l'émetteur (S), à l'aide de tables ou de fonctions.

**6.** Procédé selon la revendication 5, **caractérisé en ce que** les tables sont établies à l'aide de mesurages de puissances de réflexions de réflecteurs réels.

**7.** Procédé selon la revendication 5 ou 6, **caractérisé en ce que** la puissance de réflexion est déterminée à l'aide d'une loi de Rice.

**8.** Procédé selon la revendication 7, **caractérisé en ce que** la loi de Rice est déterminée par un coefficient de Rice qui est fonction de l'élévation de l'émetteur (S) et qui est obtenu par des mesurages de réflecteurs.

**9.** Procédé selon l'une des revendications 1 à 8, **caractérisé en ce que**, dans le cas où le signal de l'émetteur (S) réfléchi par ledit au moins un réflecteur (R) atteint le récepteur (RX) pendant la durée d'un chemin déterminé du récepteur (RX), une durée de vie correspondant au chemin et exprimée en une unité de longueur est attribuée audit au moins un réflecteur (R) et **en ce que** la durée de vie est choisie au hasard dans une table qui est établie par des mesurages de réflecteurs réels.

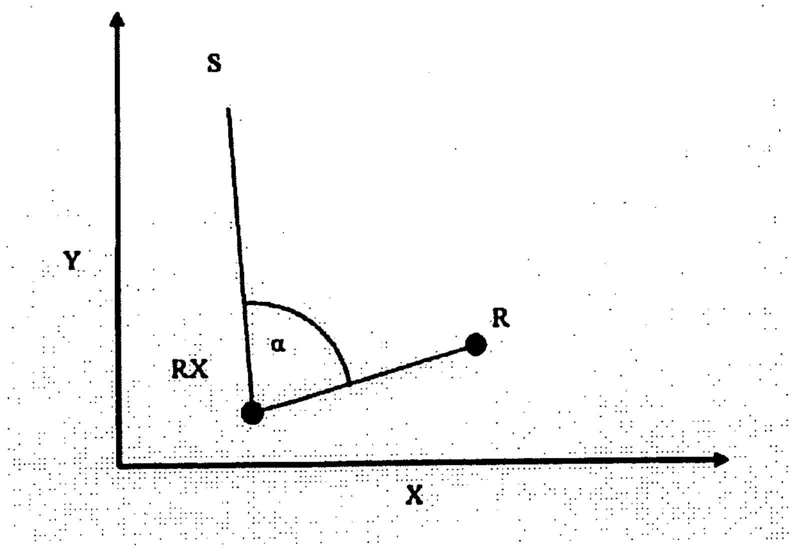
S
Y
R
α
RX
X

Fig.1

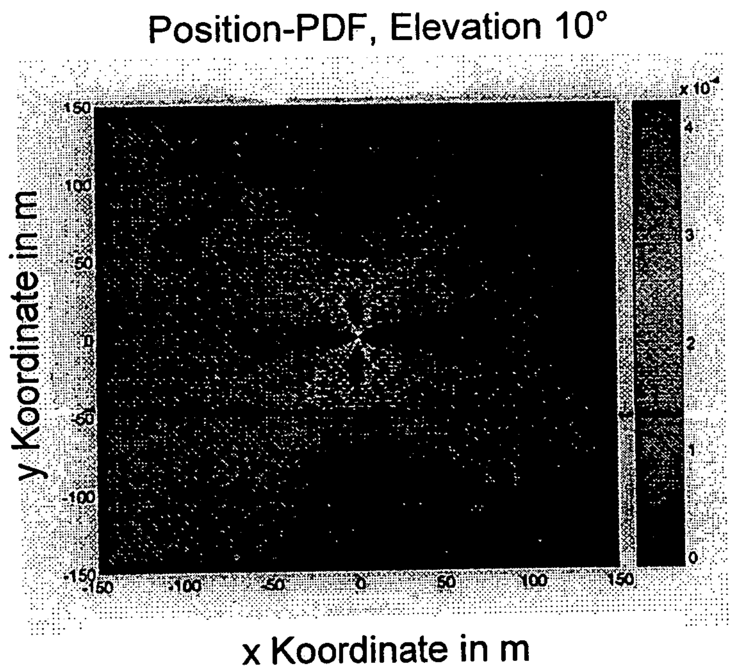
Position-PDF, Elevation 10°
y Koordinate in m
x Koordinate in m
150
100
50
0
-50
-100
-150
-150
-100
-50
0
50
100
150
x 10^-4
4
3
2
1
0

Fig.2

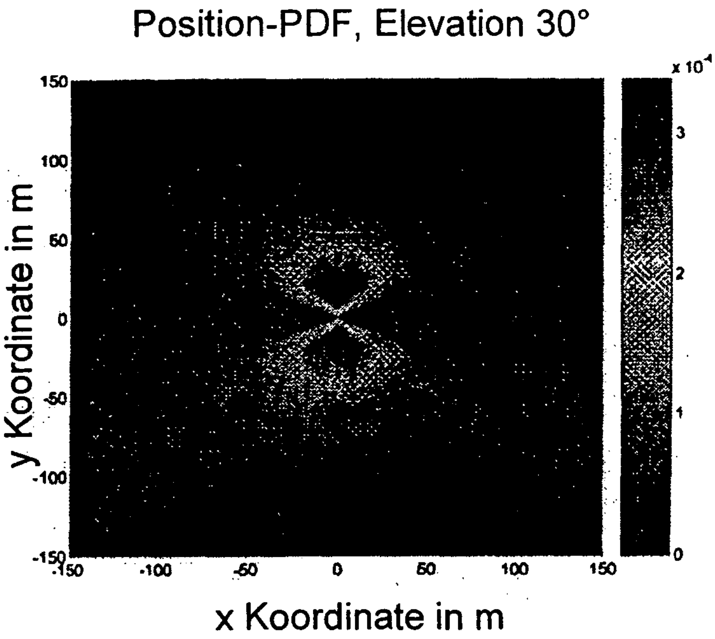
Position-PDF, Elevation 30°
x 10^-4
150
100
50
0
-50
-100
-150
-150
-100
-50
0
50
100
150
3
2
1
0
y Koordinate in m
x Koordinate in m

Fig.3

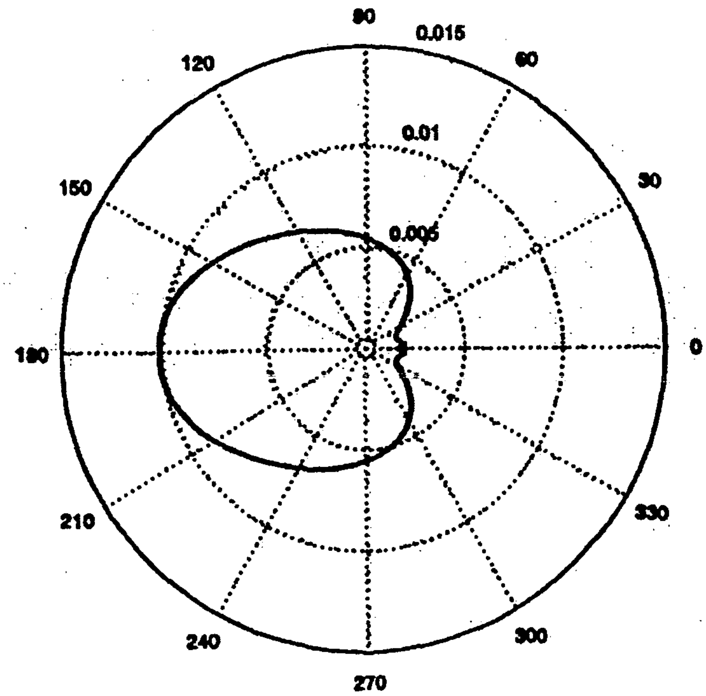
90
0.015
120
60
0.01
150
30
0.005
180
0
210
330
240
300
270

Fig.4

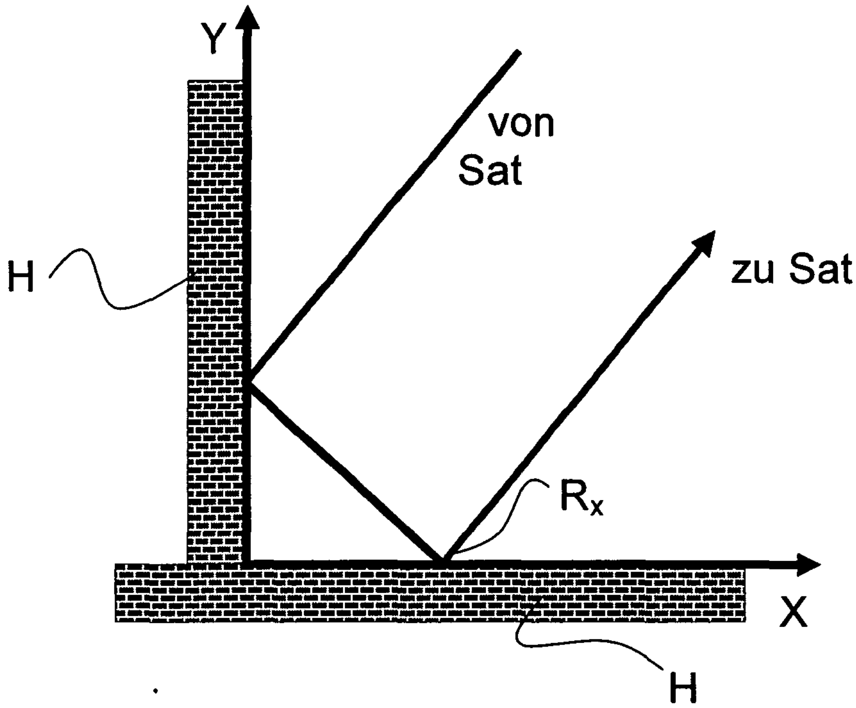


Fig.5

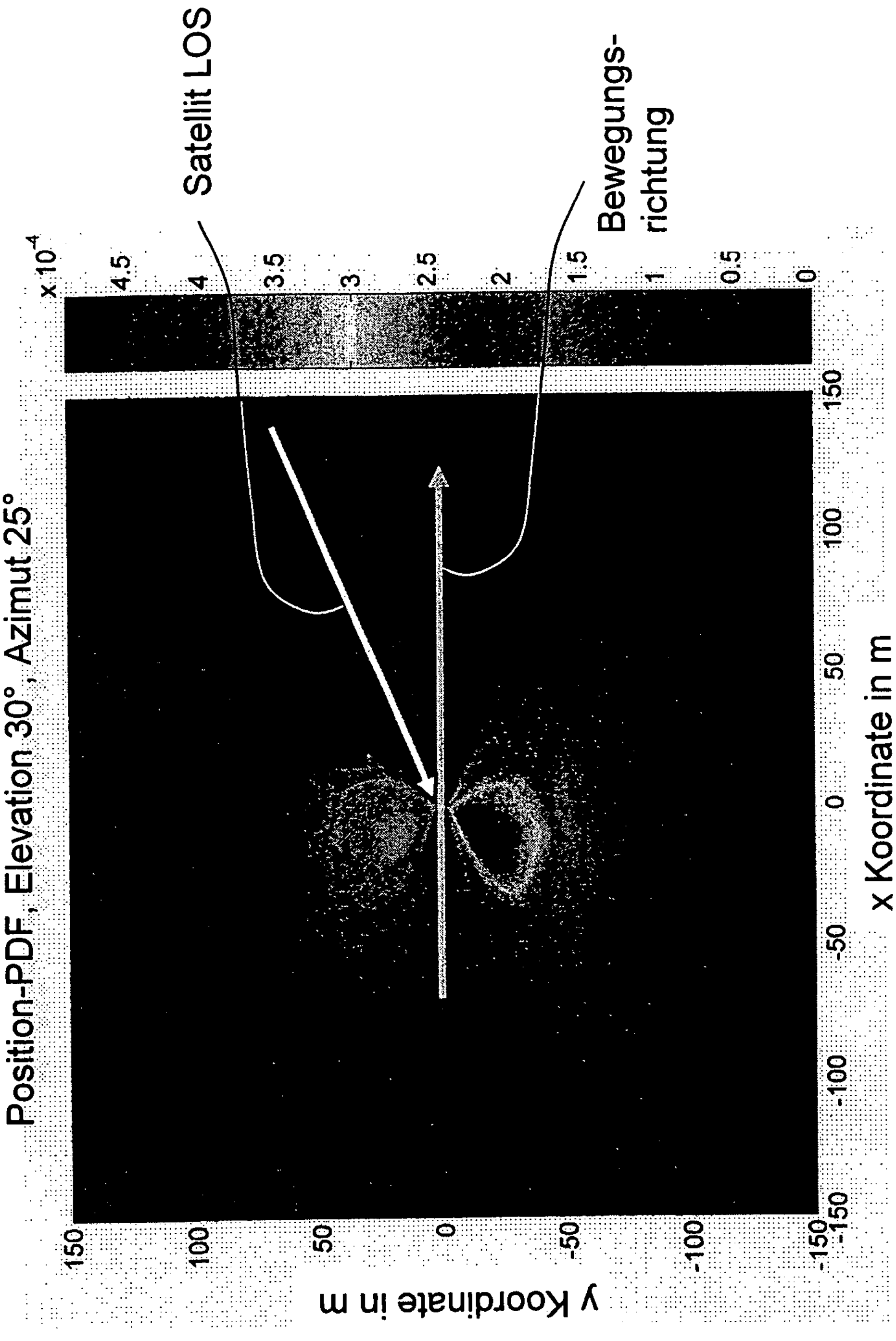
Position-PDF, Elevation 30°, Azimut 25°
Satellit LOS
Bewegungs-
richtung
x $10^{-4}$
4.5
4
3.5
3
2.5
2
1.5
1
0.5
0
150
100
50
0
-50
-100
-150
x Koordinate in m
y Koordinate in m

Fig.6

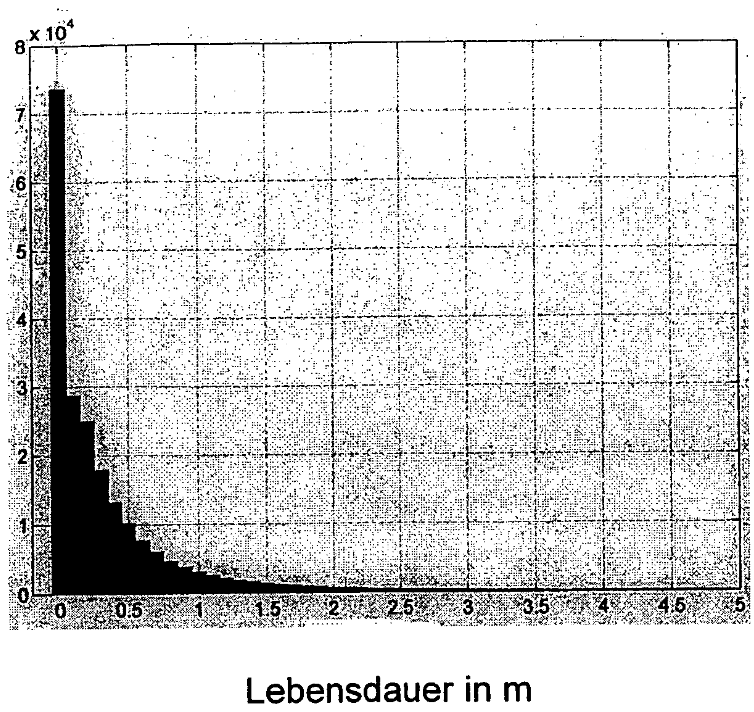
x 10^4
8
7
6
5
4
3
2
1
0
0
0.5
1
1.5
2
2.5
3
3.5
4
4.5
5
Lebensdauer in m

Fig.7

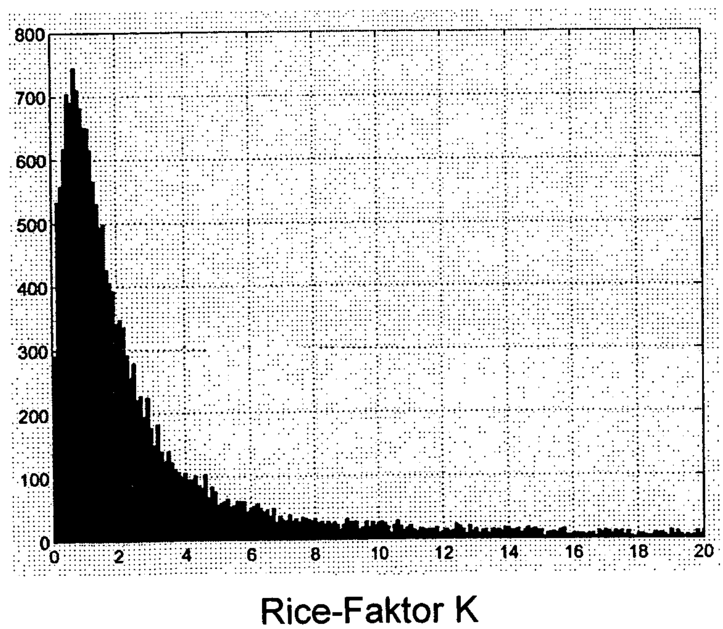
800
700
600
500
400
300
200
100
0
0
2
4
6
8
10
12
14
16
18
20
Rice-Faktor K

Fig.8

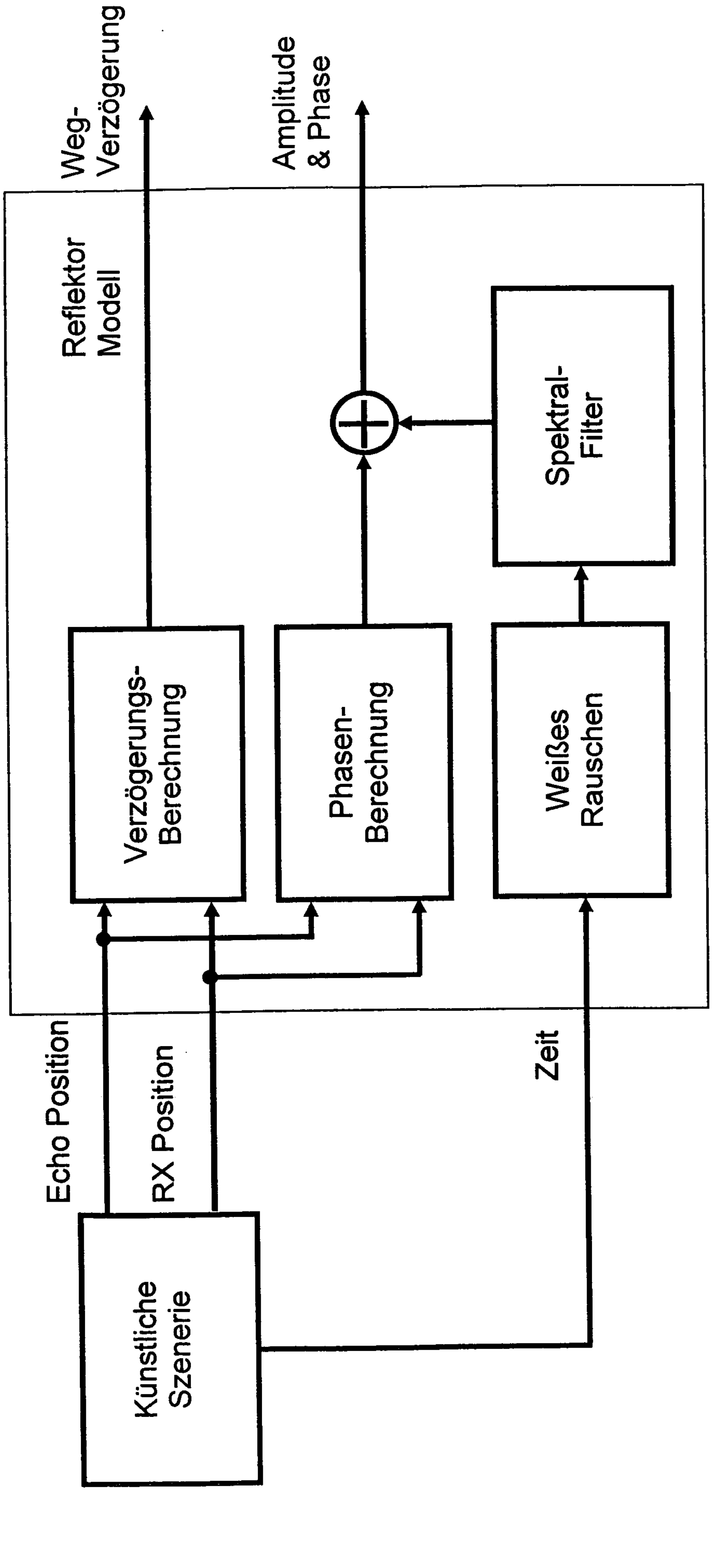
Weg-
Verzögerung
Amplitude
& Phase
Reflektor
Modell
Spektral-
Filter
Verzögerungs-
Berechnung
Phasen-
Berechnung
Weißes
Rauschen
Echo Position
RX Position
Zeit
Künstliche
Szenerie

Fig.9

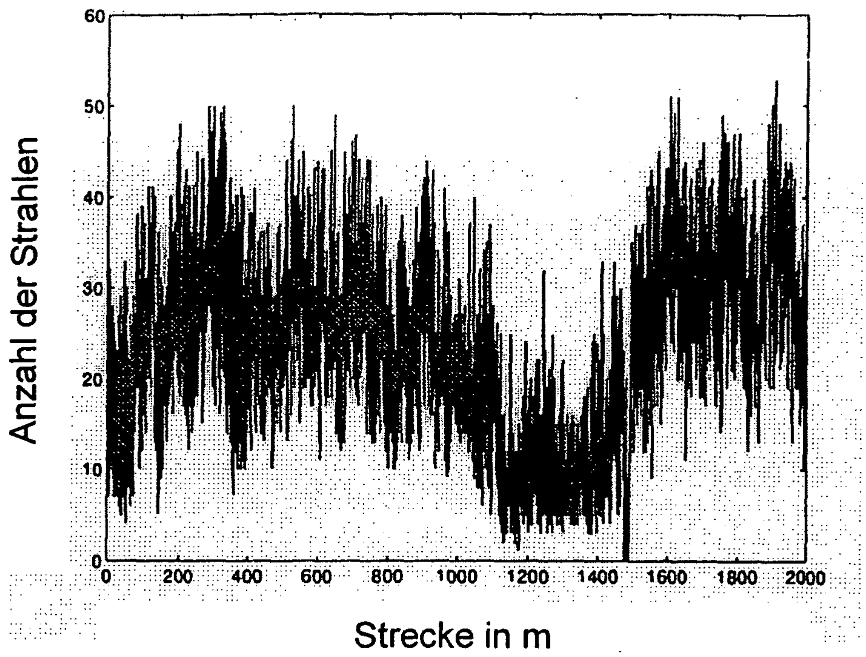
Anzahl der Strahlen
60
50
40
30
20
10
0
0
200
400
600
800
1000
1200
1400
1600
1800
2000
Strecke in m

Fig.10

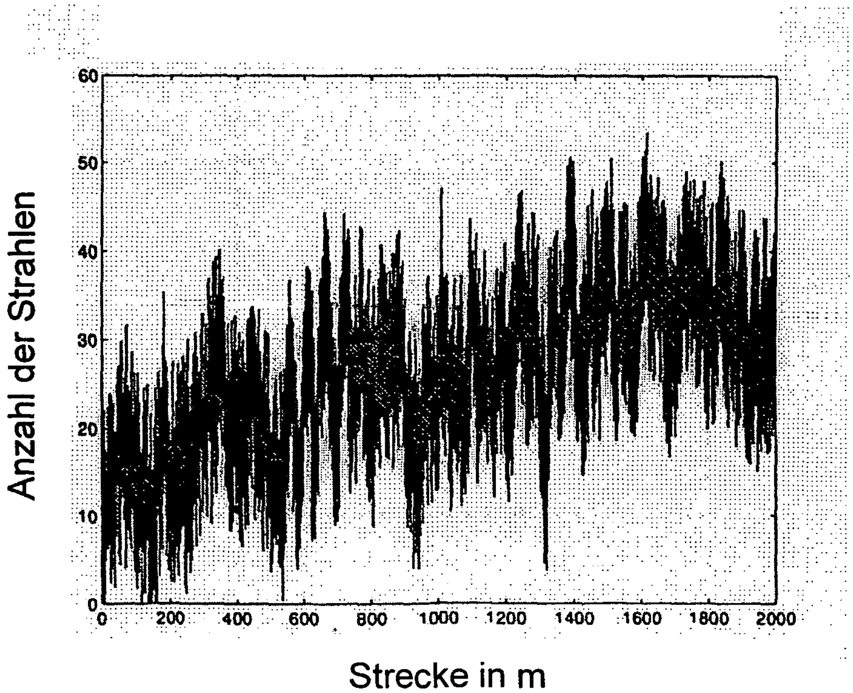
Anzahl der Strahlen
60
50
40
30
20
10
0
0
200
400
600
800
1000
1200
1400
1600
1800
2000
Strecke in m

Fig.11

Fig.12

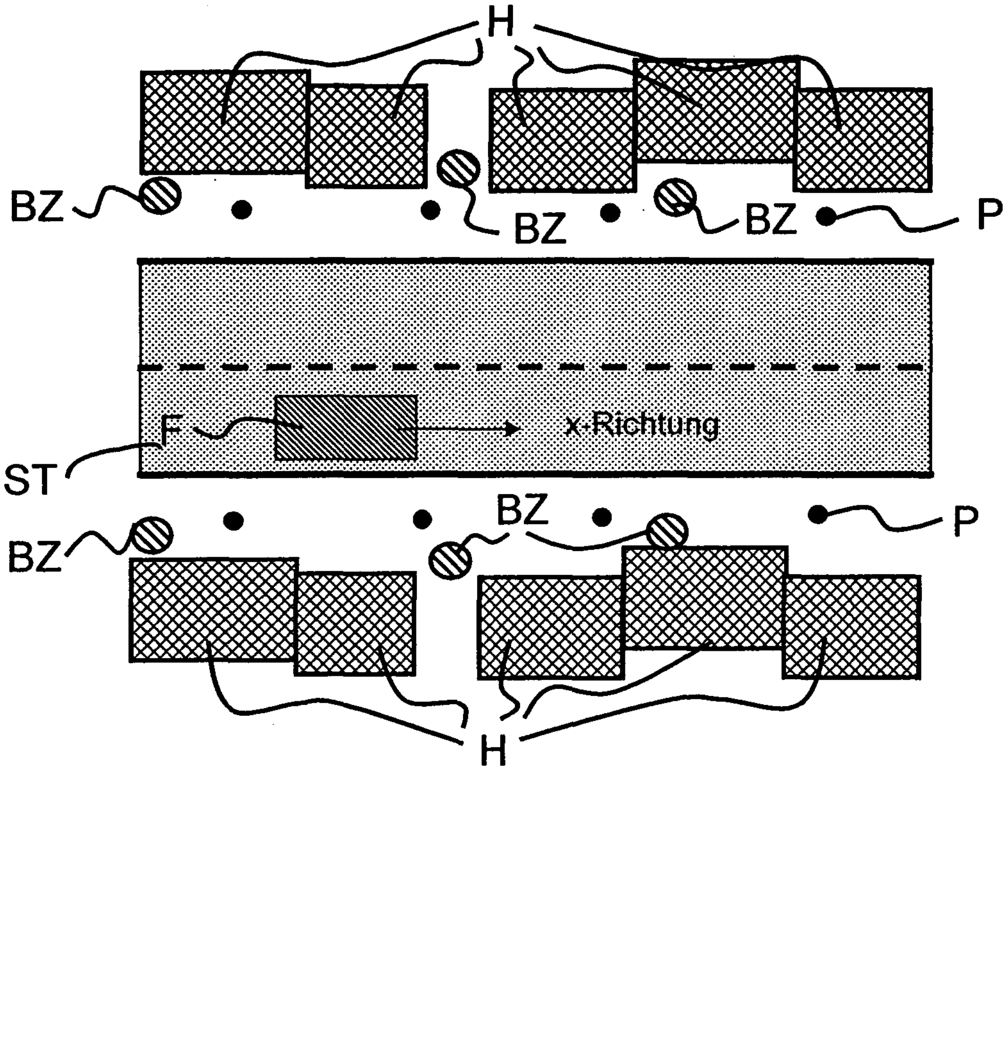

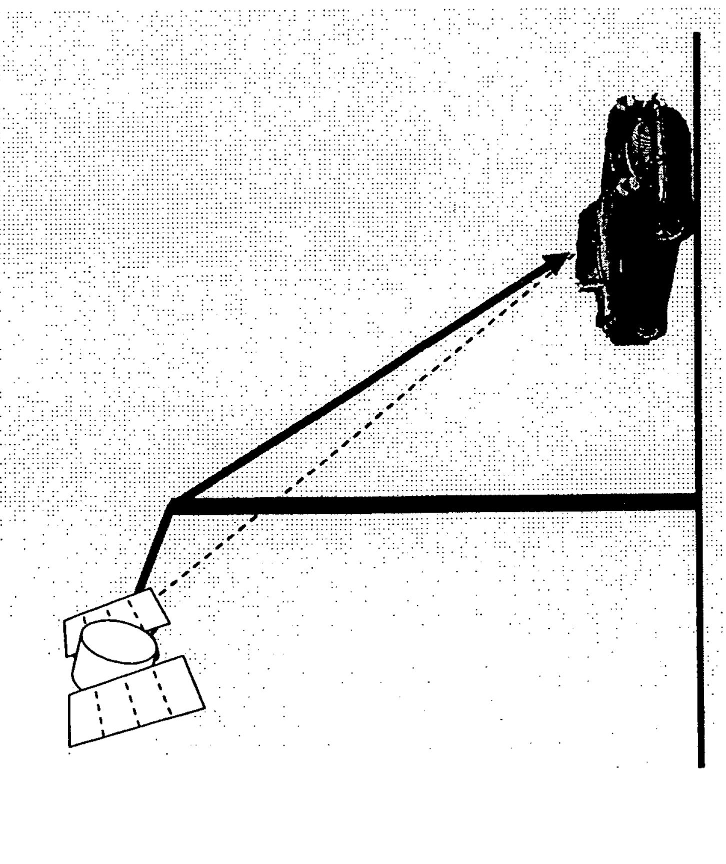

Fig.13a

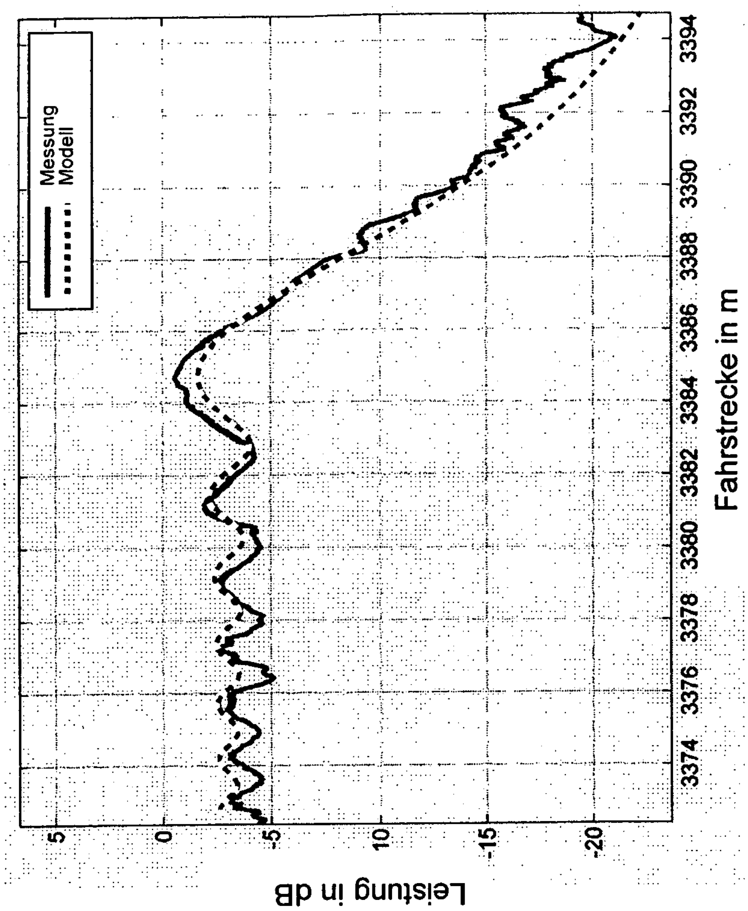


Fig.13b

Fig.14

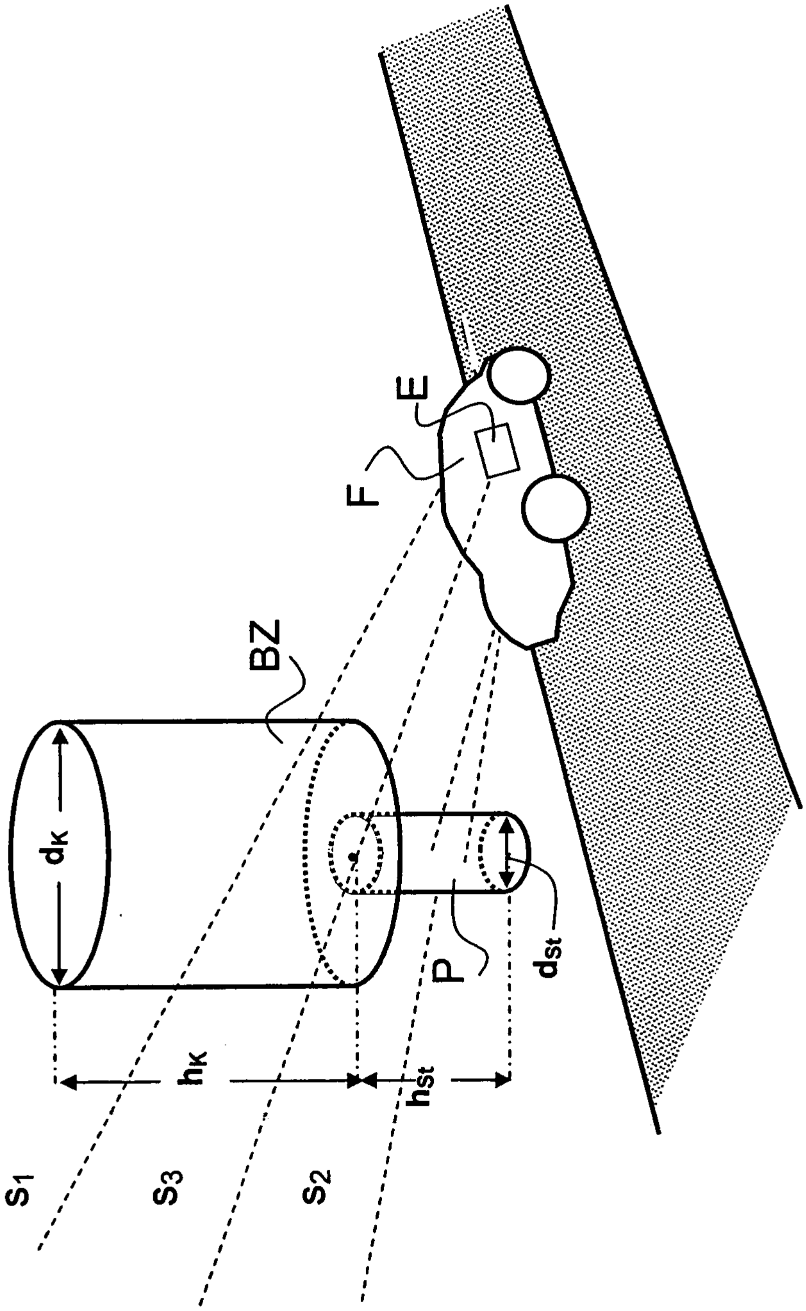

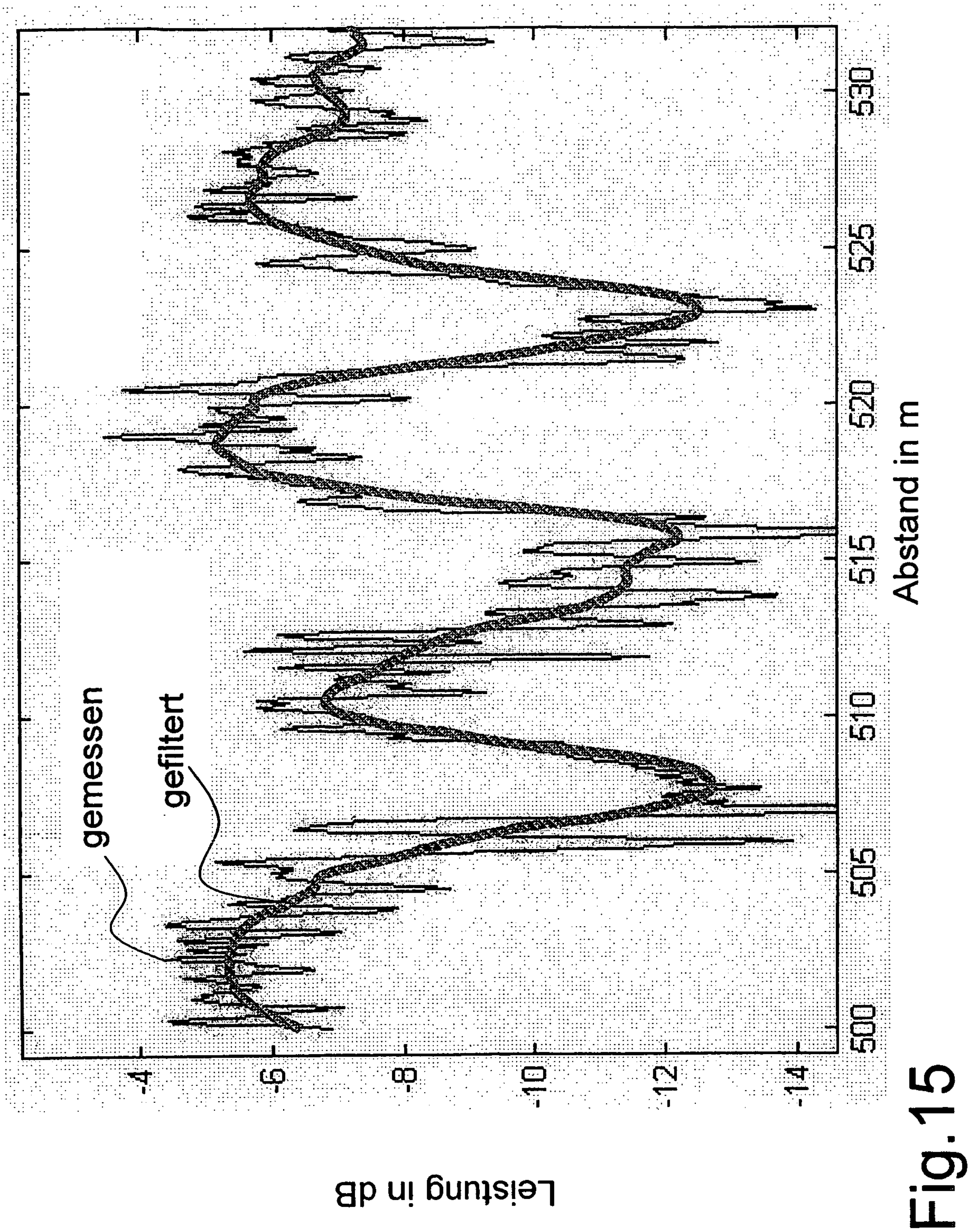
gemessen
gefiltert
Abstand in m
Leistung in dB
-4
-6
-8
-10
-12
-14
500
505
510
515
520
525
530

Fig.15

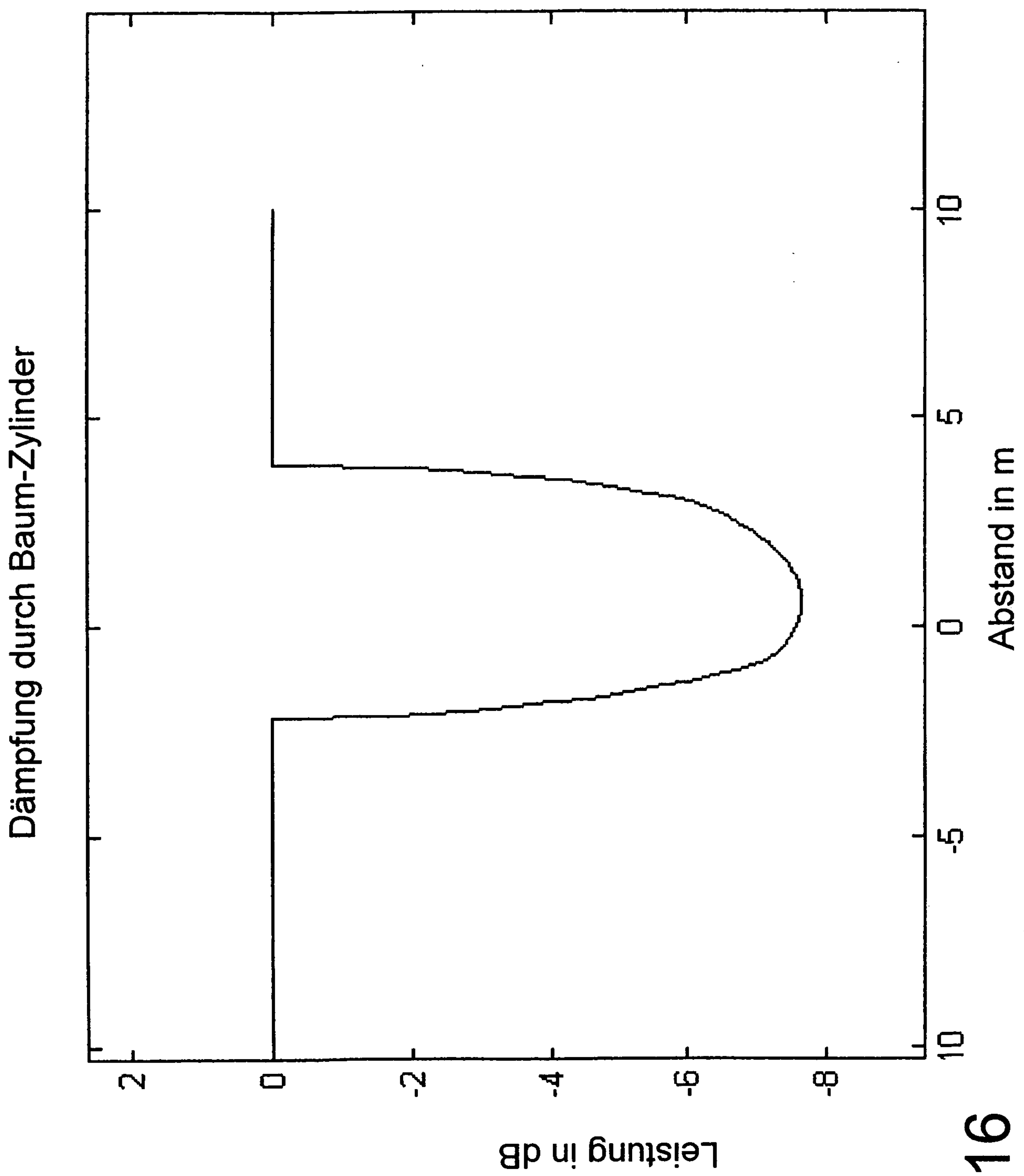
Dämpfung durch Baum-Zylinder
Abstand in m
Leistung in dB
2
0
-2
-4
-6
-8
-10
-5
0
5
10

Fig.16

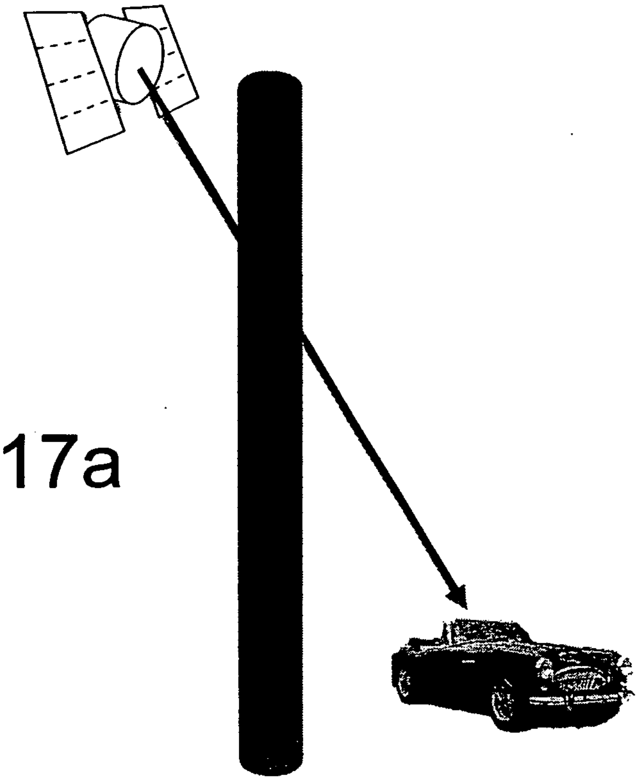

Fig.17a

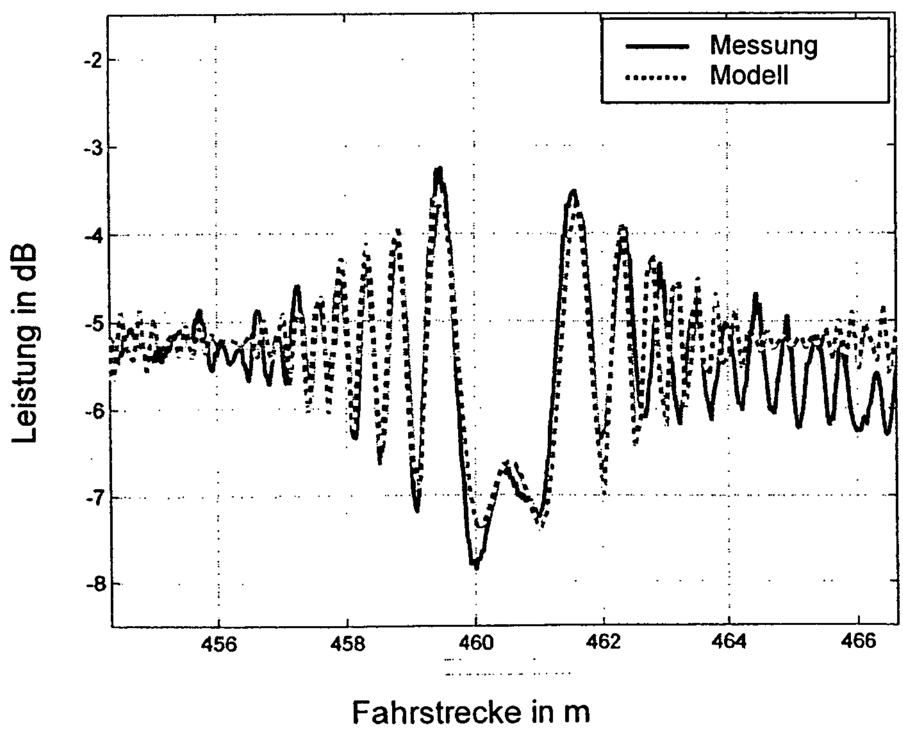


Fig.17b

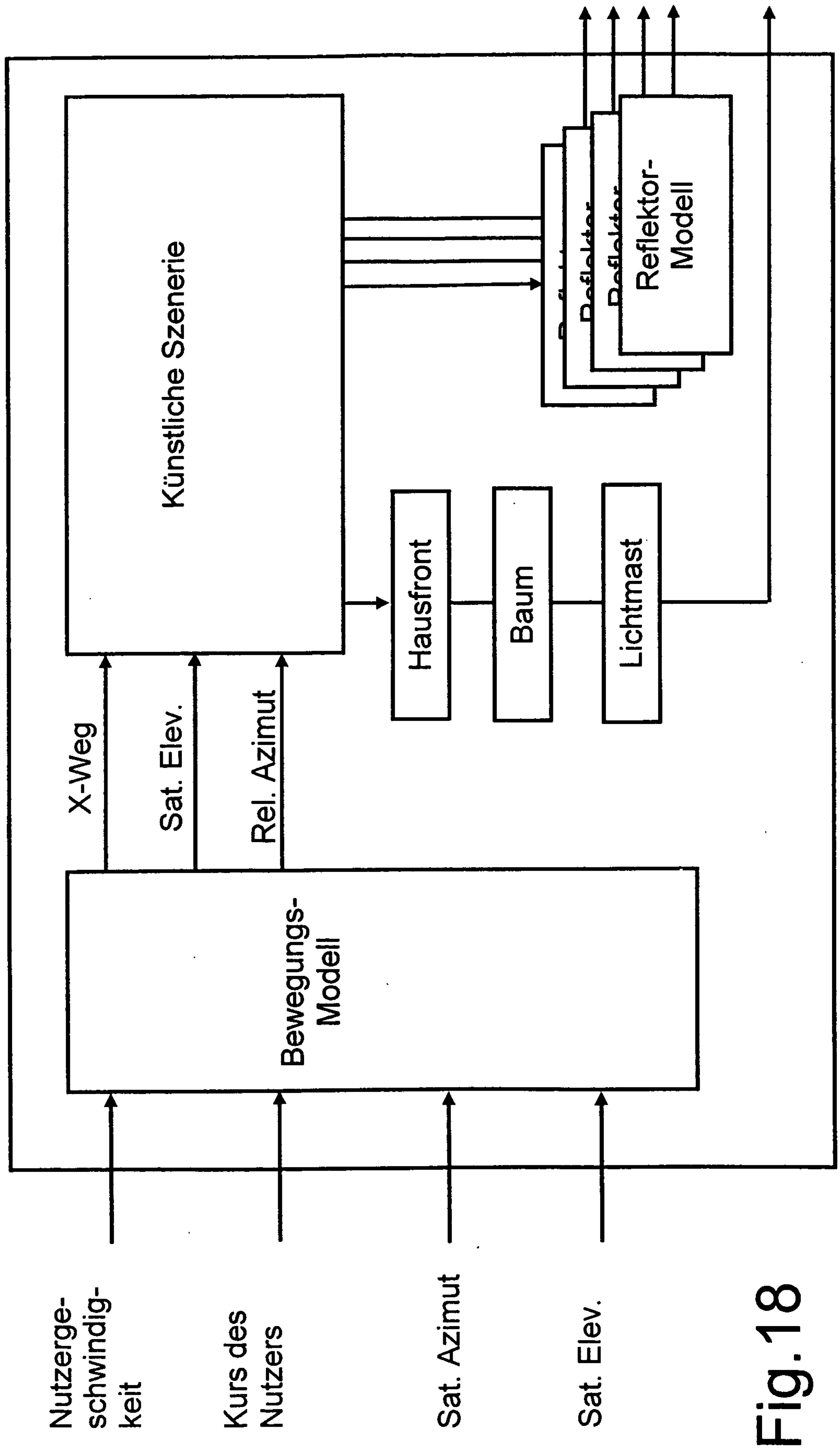
Künstliche Szenerie
Reflektor-
Modell
Hausfront
Baum
Lichtmast
X-Weg
Sat. Elev.
Rel. Azimut
Bewegungs-
Modell
Nutzerge-
schwindig-
keit
Kurs des
Nutzers
Sat. Azimut
Sat. Elev.

Fig.18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004051388
- DE 19741991 C1
- DE 19808954